# EUROPÄISCHE PATENTSCHRIFT

(11) **EP 2 206 090 B1**
(45) Veröffentlichungstag und Bekanntmachung des Hinweises auf die Patenterteilung: **06.01.2016**
(21) Anmeldenummer: 08802540.8
(22) Anmeldetag: 23.09.2008
(51) Int. Cl.: G06T 15/20

(54) **VERFAHREN UND VORRICHTUNG ZUM DARSTELLEN EINES VIRTUELLEN OBJEKTS IN EINER REALEN UMGEBUNG**
METHOD AND DEVICE FOR ILLUSTRATING A VIRTUAL OBJECT IN A REAL ENVIRONMENT
PROCÉDÉ ET DISPOSITIF DE REPRÉSENTATION D'UN OBJET VIRTUEL DANS UN ENVIRONNEMENT RÉEL

(30) Priorität: 25.09.2007 DE 102007045835
(43) Veröffentlichungstag der Anmeldung: 14.07.2010
(73) Patentinhaber: metaio GmbH, 80335 München (DE)
(72) Erfinder: MEIER, Peter, 80799 München (DE); HOLZER, Stefan, 85368 Moosburg (DE)
(74) Vertreter: Klunker . Schmitt-Nilson . Hirsch
(86) Internationale Anmeldenummer: PCT/EP2008/008055
(87) Internationale Veröffentlichungsnummer: WO 2009/040094

(56) Entgegenhaltungen:
- US-A1- 2005 069 223
- FORTIN P ET AL: "Handling Occlusions in Real-time Augmented Reality : Dealing with Movable Real and Virtual Objects" COMPUTER AND ROBOT VISION, 2006. THE 3RD CANADIAN CONFERENCE ON, IEEE, PISCATAWAY, NJ, USA, 7. Juni 2006 (2006-06-07), Seiten 54-54, XP010919365 ISBN: 978-0-7695-2542-6 in der Anmeldung erwähnt
- CAKMAKCI O ET AL: "A Compact Optical See-Through Head-Worn Display with Occlusion Support" MIXED AND AUGMENTED REALITY, 2004. ISMAR 2004. THIRD IEEE AND ACM INTE RNATIONAL SYMPOSIUM ON ARLINGTON, VA, USA 02-05 NOV. 2004, PISCATAWAY, NJ, USA,IEEE, 2. November 2004 (2004-11-02), Seiten 16-25, XP010769625 ISBN: 978-0-7695-2191-6
- ZOKAI S ET AL: "Multiview paraperspective projection model for diminished reality" MIXED AND AUGMENTED REALITY, 2003. PROCEEDINGS. THE SECOND IEEE AND AC M INTERNATIONAL SYMPOSIUM ON 7-10 OCT. 2003, PISCATAWAY, NJ, USA,IEEE, 7. Oktober 2003 (2003-10-07), Seiten 217-226, XP010662813 ISBN: 978-0-7695-2006-3
- LEPETIT V ET AL: "Handling occlusion in augmented reality systems: a semi-automatic method" AUGMENTED REALITY, 2000. (ISAR 2000). PROCEEDINGS. IEEE AND ACM INTERN ATIONAL SYMPOSIUM ON MUNICH, GERMANY 5-6 OCT. 2000, PISCATAWAY, NJ, USA,IEEE, US, 5. Oktober 2000 (2000-10-05), Seiten 137-146, XP010520323 ISBN: 978-0-7695-0846-7 in der Anmeldung erwähnt
- SANNI SILTANEN ED - ANONYMOUS: "Texture generation over the marker area", MIXED AND AUGMENTED REALITY, 2006. ISMAR 2006. IEEE/ACM INTERNATIONAL SYMPOSIUM ON, IEEE, PI, 1 October 2006 (2006-10-01), pages 253-254, XP031014687, ISBN: 978-1-4244-0650-0

## Beschreibung

Die Erfindung betrifft ein Verfahren und eine Vorrichtung zum Darstellen eines virtuellen Objekts in einer realen Umgebung, insbesondere zur Vermischung des virtuellen Objekts mit einem von einem Aufnahmegerät generierten Abbild der realen Umgebung.

Ein derartiges Verfahren und eine derartige Vorrichtung sind im Stand der Technik insbesondere im Zusammenhang mit sogenannten Augmented Reality Systemen bekannt. Diese erlauben die Vermischung von computergenerierten, virtuellen Informationen mit Seheindrücken oder einem Abbild der realen Umgebung. Die Einblendung der virtuellen Informationen bzw. Objekte kann dabei kontextabhängig und perspektivisch richtig, d.h. angepasst und abgeleitet von der jeweilig betrachteten realen Umgebung, ausgeführt sein. Als virtuelle Information kann grundsätzlich jede Art von Daten wie Gegenstände, Texte, Abbildungen etc. verwendet werden. Die reale Umgebung kann beispielsweise mit einer vom Anwender getragenen Kamera erfasst werden. Weiterhin bekannt ist insbesondere die Überlagerung virtueller Modelle mit der Realität zum Zwecke der Überprüfung der Korrektheit der Modelle bzw. der nach der Spezifikation hergestellten Realität. Anwendungsbereiche dieser Technologie sind zum Beispiel die Fabrikplanung (DE 101 28 015 A1, DE 10 2004 046 144 A1) oder das Automobildesign (DE 202 03 367).

Desweiteren sind aus dem Stand der Technik Augmented Reality-Systeme zur Produktpräsentation bekannt, wie z.B. in DE 103 01 849 B4 beschrieben. Hierin ist ein Verfahren zum Darstellen eines Einrichtungsgegenstandes in einer Benutzungsumgebung beschrieben, bei dem eine Referenzgeometrie in der Benutzungsumgebung verwendet wird, die Benutzungsumgebung einschließlich der Referenzgeometrie mittels eines Stationärbild-Aufnahmegeräts optisch aufgenommen wird und die Aufnahme in Form von Aufnahme-Bilddaten abgespeichert wird, die Position des Stationärbild-Aufnahmegeräts bezüglich der Referenzgeometrie mittels Bildverarbeitung ermittelt wird und die Bilddaten des virtuell vorliegenden Einrichtungsgegenstandes und die Aufnahme-Bilddaten perspektivisch richtig zusammengefügt werden. Die Renutzungsumgebung wird dann mit dem perspektivisch richtig eingefügten Einrichtungsgegenstand dem Anwender angezeigt. Vorteile des beschriebenen Systems und Verfahrens bestehen insbesondere in der gemeinsamen Wahrnehmung der Produkte in der Gebrauchsumgebung. Dies führt zu einer intuitiven Beurteilung der Eignung verschiedener Produkte für einen Gebrauchszweck. Des Weiteren kann sehr einfach die geometrische Eignung eines Produktes an einem Gebrauchsort ermittelt werden. Weiterhin kann die Eignung eines Produktes für einen Gebrauchszweck, z.B. die Eignung eines Möbelstückes, ohne vorherige Anlieferung bestimmt werden. Etwaige Kollisionen der Produkte mit anderen Gegenständen können vom Anwender schnell entdeckt werden.

Hinsichtlich etwaiger Kollisionen der Produkte mit anderen Gegenständen besteht oftmals das Problem, dass Verdeckungen nicht realitätsnah bzw. realitätsgetreu dargestellt werden können. Beispielsweise kann im Kollisionsfall ein virtuelles Objekt nicht von einem realen Gegenstand verdeckt werden, wenn dies die perspektivisch richtige Darstellung erfordert, sondern das virtuelle Objekt würde immer vordergründig dargestellt werden und so den realen Gegenstand überdecken. Dies führt zu einer wenig realistischen Darstellung. Ebenso kann es wünschenswert sein, bestimmte reale Gegenstände ("Störobjekte") zu entfernen, etwa wenn ein vorhandener Einrichtungsgegenstand durch einen neuen Einrichtungsgegenstand ersetzt werden soll.

Aus DE 10 2005 011 126 A1 ist ein Verfahren bekannt, welches ein Modell der Realität enthält, bei dem wechselseitige Verdeckungen der realen Umgebung und des virtuellen Objektes in Abhängigkeit einer Position des virtuellen Objektes in Bezug auf die reale Umgebung vorgesehen sind. Auch das Forschungsprojekt ARIS hat sich mit Augmented Reality auseinandergesetzt. Das Thema Verdeckung (bekannt als "Occlusion") wurde dort bereits addressiert: Der Benutzer "scannt" seine Umgebung. Es erfolgt eine Berücksichtigung der Lichtverhältnisse und ein Nachbau des Raums (nicht beschrieben wie) und eine Verwendung für Occlusion und Objektkollision. Eine Kamerakalibrierung erfolgt über Fluchtpunkte und der Benutzer ist in der Lage Gegenstände aus dem Abbild seiner Umgebung zu entfernen.

Lepetit, V. Berger, M.-O., Handling occlusion in augmented reality systems: a semi-automatic method. In Augmented Reality, 2000. (ISAR 2000). Proceedings. IEEE and ACM International Symposium on Augmented Reality. Publication Date: 2000, Seiten 137-146, Meeting Date: 10/05/2000 - 10/06/2000, ISBN: 0-7695-0846-4: In dieser Veröffentlichung muss das Verdeckungsobjekt von Hand initialisiert werden. Die automatische Übernahme der Informationen ist nur für geringe Änderungen in der Kamerapose möglich. Eine Initialisierung von Hand benötigt auch das folgende Verfahren: Resolving occlusion in image sequence made easy: Kiem Ching Ong, Hung Chuan Teh, Tiow Seng Tan. In: The Visual Computer (1998) 14:153±165, Springer-Verlag 1998.

Handling Occlusions in Real-time Augmented Reality : Dealing with Movable Real and Virtual Objects Pierre-Alexandre Fortin and Patrick H'ebert. In Proceedings of the 3rd Canadian Conference on Computer and Robot Vision (CRV'06) 0-7695-2542-3/06 © 2006 IEEE. In dieser Veröffentlichung wird innerhalb sehr kontrollierter und eingeschränkter Rahmenbedingungen das Occlusion Problem gelöst. Dabei werden 2 Ansätze verglichen: Ein Ansatz arbeitet mit einer 3D-Initialisierungsgeometrie, welche an optische Markierungen, mit denen das Störobjekt gekennzeichnet sein muss, gebunden sind. Die Initialisierungsgeometrien werden dann mit einem Background-Substraction-Algorithmus kombiniert. Dabei muss der Hintergrund aber uniform sein oder die Visualisierungskamera darf sich nicht bewegen. Für die automatische, realistische Darstellung beliebiger Objekte, ist dieses Verfahren ungeeignet. Der zweite Ansatz nutzt Tiefeninformationen aus einem Stereokamerasystem und verwendet diese direkt für Occlusion. Auf Grund von Rauschen und der bekannten Probleme des Einsatzes von Tiefenkameras ist dieser Ansatz aber qualitativ unbefriedigend.

Bezüglich der Entfernung von Störobjekten ist im Stand der Technik die Verwendung von Segmenten ebenfalls bekannt. Schwerpunkt der folgenden Veröffentlichung ist ein Ansatz zur Generierung von Texturinformationen. Die Identifikation des ersetzten Segments ist jedoch nicht allgemein für Störobjekte anwendbar, sondern es wird dort nur die Markierung entfernt, welche für Bildverarbeitungsalgorithmen leicht zu erkennen ist und für die Generierung der Kamerapose verwendet wird. (Siltanen, Sanni: "Texture Generation over the Marker Area" in IEEE/ACM International Symposium on Mixed and Augmented Reality, 2006. ISMAR 2006. Veröffentlichungsdatum: Okt. 2006, Seiten: 253-254 Ort: Santa Barbara, CA, USA, ISBN: 1-4244-0651-X)

Cakmakci et al.: "A Compact Optical See-through Head-Worn Display With Occlusion Support", Mixed and Augmented Reality, 2004, ISMAR 2004, Proceedings of the Third IEEE and ACM International Symposium on Mixed and Augmented Reality zeigt ein Verfahren, bei dem eine binäre Maske aus einem direkten Vergleich von 3D-Tiefeninformationen der Szene und des virtuellen Modells erzeugt wird. Beim Vermischen wird das virtuelle Objekt dann nur an den Stellen ins Bild eingeblendet, an denen dies in der generierten Maske hinterlegt ist. Somit hängt die Qualität des Ergebnisses direkt von der Qualität der 3D-Information ab, welche aufgrund von z.B. Rauschen stark schwanken kann und zu ungenauen Ergebnissen führt.

Der Aufsatz "Texture generation over the marker area" von Sanni Siltanen, veröffentlicht auf dem International Symposium on Mixed and Augmented Reality, 2006, beschreibt ein Augmented-Reality-Verfahren, bei dem ein in der Szene angebrachter Marker durch benachbarte Texturen überdeckt und so aus der Szene entfernt wird.

Eine Aufgabe der Erfindung ist es, ein Verfahren und eine Vorrichtung zum Darstellen eines virtuellen Objektz in einer realen Umgebung anzugeben, mit dem sich auftretende Kollisionen von virtuellen Objekten mit realen Objekten bei der Vermischung mit einer realen Umgebung weitgehend realitätsnah darstellen lassen.

Die Erfindung betrifft ein Verfahren gemäß den Merkmalen des Patentanspruchs 1, sowie eine Vorrichtung gemäß den Merkmalen des Patentanspruchs 13 bzw. 14. Weiterhin betrifft die Erfindung ein Computerprogrammprodukt nach Patent-anspruch 15.

Anwendungsbeispiele der Erfindung umfassen beispielsweise Augmented Reality Anwendungen wie etwa in Fahrzeugen, in Einrichtungsplanung, Fabrikplanung, Prototypenbau oder Versuchsbau in der Produktentwicklung. Hierbei ist insbesondere eine realitätsnahe Vermischung von virtuellem Objekt mit der realen Umgebung auch bei im Zuge der Vermischung entstehenden Kollisionen ermöglicht.

Mögliche Anwendungen des Systems und des Verfahrens gemäß der Erfindung schließen insbesondere Anwendungen der Augmented Reality Technologie in den Bereichen Verkauf, Service und Wartung, Anwendungen in der Produktion, sowie allgemein Anwendungen im mobilen Umfeld ein. Des Weiteren kann sehr einfach die geometrische Eignung eines Produktes an einem Gebrauchsort ermittelt werden.

Insbesondere beschreibt ein Aspekt der Erfindung ein Verfahren zum Darstellen eines virtuellen Objekts in einer realen Umgebung, aufweisend die folgenden Schritte: Generieren von einer oder mehreren zweidimensionalen Abbildungen einer realen Umgebung mittels eines Aufnahmegeräts, Ermitteln einer Position des Aufnahmegeräts relativ zu wenigstens einem Bestandteil der realen Umgebung, Generierung von 3D-Bildinformationen oder Rauminformationen, Segmentierung von wenigstens einem, in der Realität nicht markierten Bereich der realen Umgebung in der zweidimensionalen Abbildung zur Identifizierung wenigstens eines Segments der realen Umgebung in Abgrenzung gegenüber einem übrigen Teil der realen Umgebung unter Bereitstellung von entsprechenden Segmentierungsdaten, und Vermischen des virtuellen Objekts mit der zweidimensionalen Abbildung der realen Umgebung unter Berücksichtigung der Segmentierungsdaten derart, dass wenigstens ein Teil des Segments der realen Umgebung aus der Abbildung der realen Umgebung entfernt wird

Es besteht eine Grundidee der Erfindung somit in der Kombination von Sensorhinweisen (z.B. radar- oder kamerabasierter 3D-Rekonstruktionsdaten) mit 2D-Segmentierungsverfahren für Entfernung von Störobjekten.

Die Erfindung löst das Problem der Entfernung von Störobjekten mittels der Verwendung von Bildsegmenten. Für die Raumplanung sind grundsätzlich alle Einzelschritte manuell oder mittels eines automatischen, computergestützten Verfahrens (sog. "Wizard") durchführbar. Ein Wizard versucht Informationen automatisch zu extrahieren und der Benutzer kann Ergebnisse bestätigen, bzw. durch die Angabe weiterer Informationen verbessern. Z.B. Kann ein Wizard Störobjekte identifizieren und deren Konturen kennzeichnen. Der Benutzer kann dann ggf. die Konturen verbessern.

Die Erfindung kann aber nicht nur für die Raumplanung, sondern auch für andere Augmented-Reality(AR)-Anwendungen, zum Beispiel ein AR-Navigationssystem im Fahrzeug, verwendet werden.

Insbesondere eine Kamera als Aufnahmegerät und ein Display als Anzeigeeinrichtung bilden ein sog. Video-See-Through-System, bei welchem sich vor dem Auge des Benutzers ein Videobildschirm befindet, auf. dem reale und virtuelle Seheindrücke vermischt werden. Im Falle von sog. optischem See-Through geschieht die Vermischung durch einen sogenannten Optischen Mixer - einer semitransparenten Darstellungsvorrichtung (etwa eine halbdurchlässige Datenbrille, die auf dem Kopf des Benutzers getragen wird) vor dem Auge des Benutzers, bei der die reale Welt über die Transparenz der Vorrichtung zu sehen ist und die Überlagerung von virtuellen Informationen über Projektion auf die Darstellungsvorrichtung geschieht.

Ein möglicher Einsatz der Erfindung ist die Veränderung eines realen Raumes, zum Beispiel um in diesem Raum virtuelle Einrichtungsgegenstände zu platzieren, wofür man freien Raum benötigt. Ein Vorteil der Augmented-Reality-Technologie ist die Betrachtung von Gegenständen in ihrer realen Umgebung, zum Beispiel die Betrachtung eines Holztisches auf einem vorhandenen Holzboden oder vor einem vorhandenen Schrank. Daher ist es sinnvoll nicht rein virtuell zu arbeiten, sondern störende reale Möbelstücke aus der Szene zu entfernen oder Ihre Position im Raum zu verändern, ohne sie körperlich bei Seite räumen zu müssen.

Es kann dazu wenigstens ein Bereich der realen Umgebung ausgewählt werden, aus welchem Informationen zum Überdecken des zu entfernenden Teils der realen Umgebung gewonnen werden. Es erfolgt eine Überdeckung des zu entfernenden Teils der realen Umgebung auf Basis von Texturinformation in der Umgebung des zu entfernenden Teils. Es können auch dreidimensionale Tiefeninformationen zur Auswahl geeigneter Informationsquellen, insbesondere in Form einer vorhandenen Bodenebene oder einer vorhandenen Wandebene, für die Wahl der verwendeten Texturinformation berücksichtigt werden.

In einer Ausführungsform der Erfindung wird die reale Umgebung einschließlich einer Referenzgeometrie optisch aufgenommen und die Position des Aufnahmegeräts unter Verwendung der Referenzgeometrie ermittelt. Als Referenzgeometrie kann ein Marker verwendet werden, anhand dessen die räumliche Position des Aufnahmegeräts in Bezug zur aufgenommenen Realität festgestellt werden kann.

Eine vorteilhafte Ausprägung der Erfindung besteht dahingehend, dass die reale Umgebung mittels des Aufnahmegeräts unter verschiedenen Positionen des Aufnahmegeräts optisch aufgenommen wird und eine jeweilige Aufnahme in einem entsprechenden Aufnahme-Bilddatensatz gespeichert wird, wobei die in einem der Aufnahme-Bilddatensätze gewonnenen Segmentdaten zumindest teilweise in den übrigen der Aufnahme-Bilddatensätze verwendet werden können, um die reale Umgebung mit dem eingefügten virtuellen Objekt in jeweiligen den Aufnahme-Bilddatensätzen entsprechenden Ansichten darzustellen. Dabei kann über mehrere Aufnahmen hinweg sowohl die Segmentidentifikation als auch die Segmentauswahl unterstützt werden.

Die Segmentidentifikation bezeichnet die Unterteilung von Bildbereichen, an denen unterschiedliche Bestandteile der Realität abgebildet sind. Zum Beispiel wäre ein mögliches Segment der Bildbereich, in dem ein Schrank oder ein vorausfahrendes Fahrzeug abgebildet ist. Die Segmentauswahl wird durch den Benutzer. durchgeführt und teilt dem System zum Beispiel mit, welches Segment "wegradiert" werden soll.

In einer Ausführungsform der Erfindung ist das virtuelle Objekt ein Einrichtungsgegenstand oder ein Teil eines Einrichtungsgegenstandes und die reale Umgebung eine Benutzungsumgebung. Beispielsweise ist das Verfahren in einem Augmented Reality System einer computergestützten Einkaufsplattform, insbesondere für Einrichtungsgegenstände, implementiert. Es kann sich hierbei z.B. um eine Einkaufsplattform eines Möbelhauses handeln.

In einer anderen Ausführungsform der Erfindung ist das virtuelle Objekt ein fahrzeugbezogener Gegenstand oder eine fahrzeugbezogene Anzeige und die reale Umgebung eine Fahrzeugumgebung. Beispielsweise ist das Verfahren in einem Augmented Reality System eines Fahrzeugs implementiert.

Eine erfindungsgemäße Vorrichtung zum Darstellen eines virtuellen Objekts in einer realen Umgebung weist folgende Merkmale auf: ein Aufnahmegerät zur Erzeugung einer zweidimensionalen Abbildung der realen Umgebung, des weiteren ein Datenverarbeitungssystem, welches die Position des Aufnahmegeräts relativ zu wenigstens einem Bestandteil der aufgenommenen realen Umgebung bestimmt. In dem Datenverarbeitungssystem ist ein Verfahren implementiert, das zur Segmentierung von wenigstens einem, in der Realität nicht markierten Bereich der realen Umgebung in der zweidimensionalen Abbildung zur Identifizierung wenigstens eines Segments der realen Umgebung in Abgrenzung gegenüber einem übrigen Teil der realen Umgebung unter Bereitstellung von entsprechenden Segmentierungsdaten geeignet ist. Eine mit dem Datenverarbeitungssystem verbundene Anzeigeeinrichtung dient dazu, die mit dem Aufnahmegerät erzeugte Abbildung der realen Umgebung vermischt mit dem virtuellen Objekt unter Berücksichtigung der Segmentierungsdaten derart anzuzeigen, dass wenigstens ein Teil des Segments der realen Umgebung aus der Abbildung der realen Umgebung entfernt wird.

Das Aufnahmegerät kann eine Kamera oder ein Radargerät oder eine Time-of-Flight-Kamera oder eine Stereo-Kamera sein oder enthalten. Auch ist eine Kombination möglich von 2D-Kamera und Time-of-Flight-Kamera. Insbesondere eine Kamera als Aufnahmegerät und ein Display als Anzeigeeinrichtung bilden ein sog. Video-See-Through-System, bei welchem sich vor dem Auge des Benutzers ein Bildschirm befindet, auf dem reale und virtuelle Seheindrücke vermischt werden.

Die Erfindung betrifft auch ein Computerprogrammprodukt, welches Softwarecodeabschnitte aufweist, welche in einem erfindungsgemäßen Verfahren zum Ermitteln der Position des Aufnahmegeräts, idealerweise zur Generierung von 3D-Bilddaten aus einer oder mehreren Abbildungen, zur Segmentierung von wenigstens einem Bereich der realen Umgebung und zum Vermischen des virtuellen Objekts mit der realen Umgebung unter Berücksichtigung der Segmentierungsdaten geeignet sind, wenn sie in einem System zum Darstellen eines virtuellen Objekts in einer realen Umgebung gespeichert sind.

Weitere Aus- und Weiterbildungen der Erfindung sind in den Unteransprüchen angegeben.

Die Erfindung wird im folgenden anhand der in der Zeichnung dargestellten Figuren näher erläutert.
- Figur 1: zeigt eine schematische Darstellung oder Ansicht einer realen Umgebung, die mit einem virtuellen Objekt vermischt werden soll, wobei ein Teil des virtuellen Objekts sich hinter einem realen Gegenstand befindet, somit mit diesem teilweise kollidiert,
- Figur 2: zeigt anhand einer beispielhaften Szenerie Schritte zur Segmentierung eines realen Raumes für eine nachfolgende Berücksichtigung bei der Vermischung mit einem virtuellen Objekt,
- Figur 3: zeigt in schematischer Darstellung einen Schritt zur dreidimensionalen Segmentierungsinitialisierung anhand von Bildmerkmalen,
- Figur 4: zeigt anhand einer beispielhaften Szenerie einen beispielhaften Schritt zur manuellen oder semi-manuellen Segmentierung eines realen Raumes für eine nachfolgende Berücksichtigung bei der Vermischung mit einem virtuellen Objekt,
- Fig. 5 bis 8: zeigen anhand einer beispielhaften Szenerie andere Ausführungsformen zur manuellen oder semi-manuellen Segmentierung eines realen Raumes,
- Figur 7: zeigt die Nutzung eines 3D-Raummerkmals als Initialisierungsinformation für ein 2D-Segmentierungsverfahren.
- Figur 9: zeigt in einem Flussdiagramm eine Ausführungsform eines erfindungsgemäßen Verfahrens.
- Fig. 10, 11: zeigen schematische, prinzipielle Ansichten von Komponenten eines erfindungsgemäßen Systems

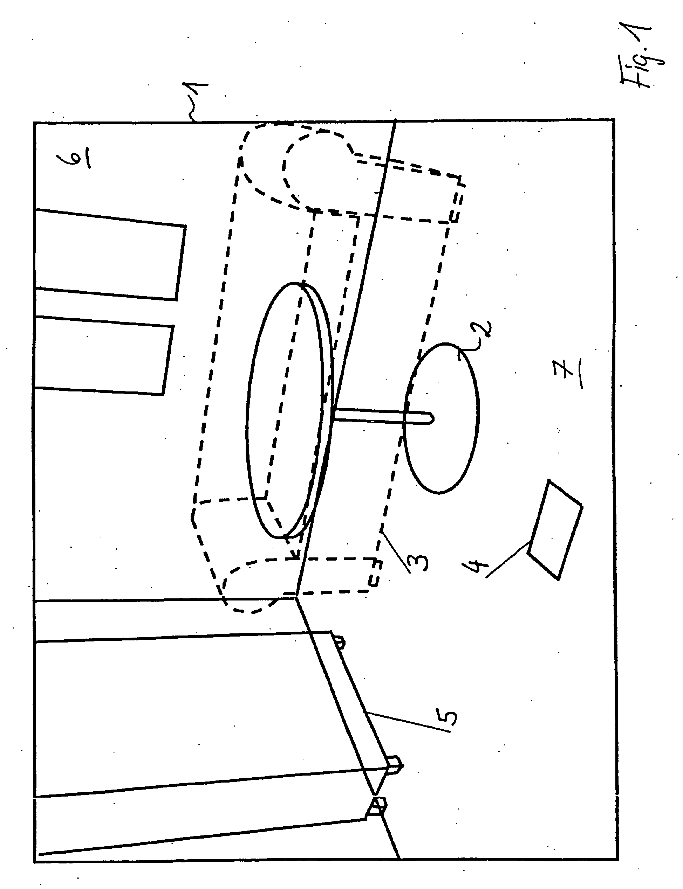

Ein bekanntes Problem der AR-Technologie ist, dass virtuelle Objekte, ohne besondere Vorkehrungen, einzelne reale Gegenstände in der Ansicht der Realität oftmals verdecken. Dies verdeutlicht beispielhaft Fig. 1 anhand einer Szenerie 1, in der das virtuelle Objekt ein Einrichtungsgegenstand ist und die reale Umgebung eine Benutzungsumgebung. Das virtuelle Objekt ist hier in Form eines Sofas 3 ausgeführt, das hinter einem realen Gegenstand, hier ein Tisch 2, platziert werden soll. Als weitere reale Objekte sind in Fig. 1 ein Schrank 5, ein Fußboden 7 und eine Referenzgeometrie 4 in Form eines Markers auf dem Fußboden 7 vorhanden.

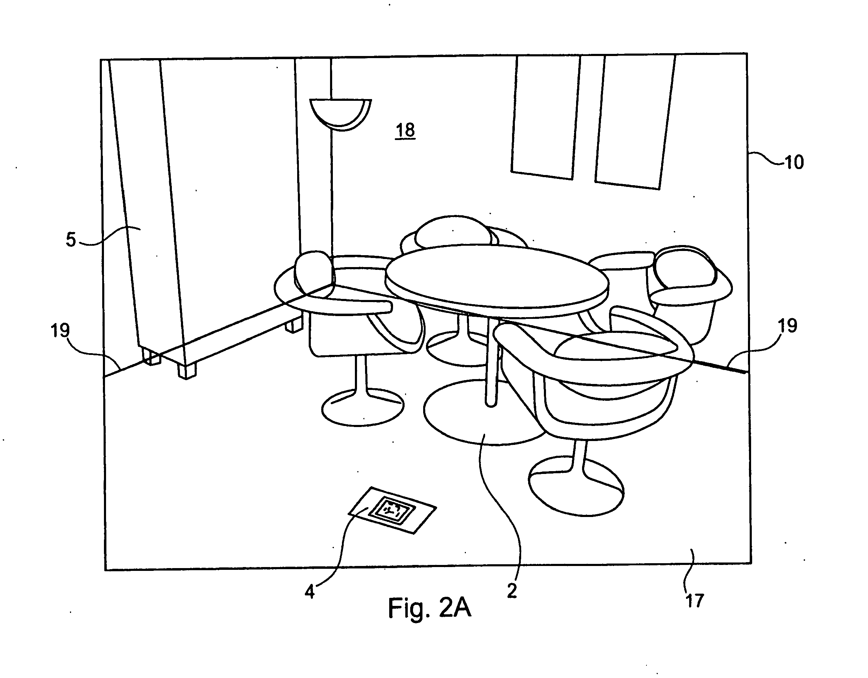

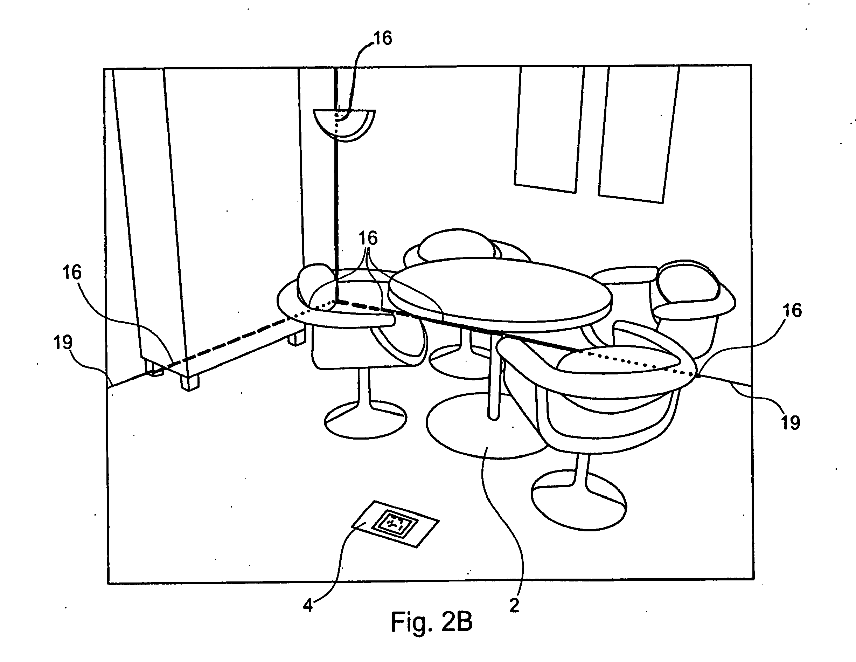

Insbesondere wird zur Schaffung der Szenerien in Fig. 1 und in den nachfolgenden Figuren 2 bis 8 jeweils ein Verfahren zum Darstellen eines virtuellen Einrichtungsgegenstandes in einer realen Benutzungsumgebung angewandt. Im vorliegenden Fall wird eine Referenzgeometrie in der Benutzungsumgebung zur Gewinnung von Positionsdaten verwendet. Es sind jedoch im Prinzip auch andere bekannte Verfahren zur Positionsbestimmung etwa einer verwendeten Aufnahmekamera, wie markerloses Tracking, anwendbar.

Beispielhaft anhand von Fig. 1 erläutert, wird die Benutzungsumgebung 6 einschließlich der Referenzgeometrie 4 mittels eines nicht dargestellten Aufnahmegeräts (beispielsweise eine Kamera) optisch aufgenommen und die Aufnahme in Form von Aufnahme-Bilddaten abgespeichert. Die Position des Aufnahmegeräts bezüglich der Referenzgeometrie 4 wird mittels bekannter Bildverarbeitungsalgorithmen ermittelt, wobei die Bilddaten des virtuell vorliegenden Einrichtungsgegenstandes (hier Sofa 3) und die Aufnahme-Bilddaten perspektivisch richtig zusammengefügt werden. Die Benutzungsumgebung 6 wird dann mit dem perspektivisch richtig eingefügten Sofa 3 dem Anwender angezeigt. Vorteile des beschriebenen Systems und Verfahrens bestehen insbesondere in der gemeinsamen Wahrnehmung von realen und virtuellen Gegenständen in der Gebrauchsumgebung. Dies führt zu einer intuitiven Beurteilung der Eignung verschiedener Produkte für einen Gebrauchszweck. Des Weiteren kann sehr einfach die geometnsche Eignung eines Produktes an einem Gebrauchsort ermittelt werden. Weiterhin kann die Eignung eines Produktes für einen Gebrauchszweck, z.B. die Eignung eines Möbelstückes, ohne vorherige Anlieferung bestimmt werden. Etwaige Kollisionen der Produkte mit anderen Gegenständen können vom Anwender schnell entdeckt werden.

Wie aus Fig. 1 ersichtlich, sollte in der vermischten Ansicht bzw. Darstellung der Szenerie 1 zumindest ein Teil des virtuellen Sofas 3 vom Tisch 2 verdeckt dargestellt werden. Mit herkömmlicher AR-Technologie hingegen ist es jedoch so, dass ohne Zusatzinformationen die virtuellen Objekte, unabhängig von ihrer räumlichen Lage immer im Vordergrund angezeigt werden, das heißt beim Verschieben des Sofas 3 an die in Fig. 1 gezeigte Stelle würde der Tisch 2 vom Sofa 3 zumindest teilweise verdeckt werden. Dies stört allerdings die realistische Wahrnehmung, da virtuelle Objekte, welche räumlich hinter realen Objekten angeordnet werden, von diesen verdeckt dargestellt werden müssten, damit die vermischte Darstellung realitätsnah wirkt. Mit anderen Worten, kann der Tisch 2 als Störobjekt bei der Platzierung des virtuellen Sofas 3 betrachtet werden.

Eine weitere Möglichkeit bei der Platzierung des Sofas 3 ist die Veränderung des Raumes (Benutzungsumgebung 6), um beispielsweise zu sehen, wie das Sofa 3 ohne den Tisch 2 in dem Raum wirkt oder um freien Raum zu schaffen, wenn Sofa 3 und Tisch 2 in ihrer Position kollidieren. Ein Vorteil der AR-Technologie ist hierbei die Betrachtung von Gegenständen in ihrer realen Umgebung, zum Beispiel die Betrachtung des virtuellen Sofas 3 auf einem vorhandenen Holzboden 7 oder vor dem vorhandenen Schrank 5. Daher ist es sinnvoll nicht rein virtuell zu arbeiten, sondern störende reale Möbelstücke aus der Szene zu entfernen oder Ihre Position im Raum zu verändern, ohne sie körperlich bei Seite räumen zu müssen.

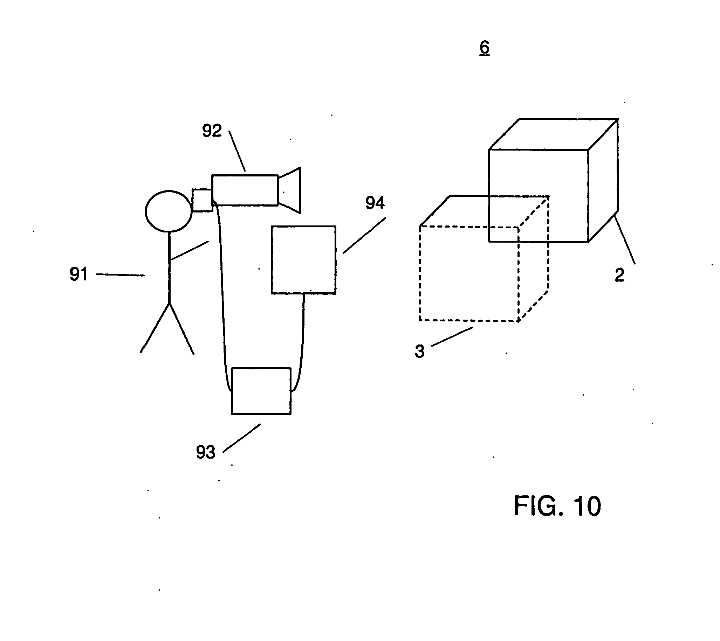

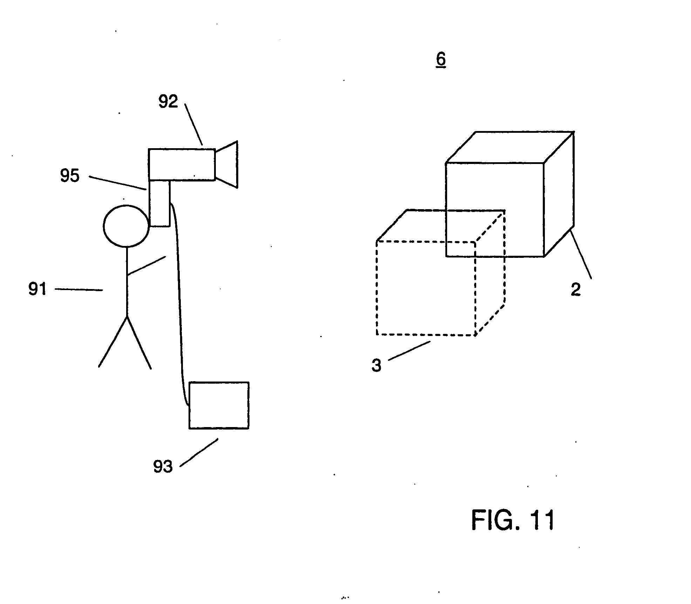

Figuren 10 und 11 zeigen in diesem Zusammenhang jeweils eine schematische Darstellung einer Ausführungsform eines erfindungsgemäßen Systems mit einer Video-See-Through-Einrichtung bzw. Optical-See-Through-Einrichtung.

Die Vorrichtungen nach Figuren 10 und 11 weisen ein Aufnahmegerät 92 (z.B. eine Kamera) zur Erzeugung einer zweidimensionalen Abbildung der realen Umgebung 6 auf, sowie ein Datenverarbeitungssystem 93, welches die Position des Aufnahmegeräts 92 relativ zur realen Umgebung bestimmt. In figuren 10 und 11 sind der reale Tisch 2 und das virtuelle Sofa 3 lediglich schematisch in Quaderform gezeigt. Eine mit dem Datenverarbeitungssystem 93 verbundene Darstellungsvorrichtung, in Figur 10 ein Bildschirm 94 und in Figur 11 eine semitransparente Datenbrille 95, jeweils vor dem Auge des Benutzers 91, stellt das virtuelle Objekt 3 vermischt mit der realen Umgebung 6 dar.

Die Darstellungsvorrichtung kann auch ein Head Up Display eines Fahrzeugs sein, wobei beispielsweise dem Fahrer eine Information mittels der Windschutzscheibe des Fahrzeugs vor dem Auge eingeblendet wird. Außerdem kann als Aufnahmegerät optional ein Radargerät, ein Scanner, eine Tiefenkamera oder ähnliches in analoger Weise verwendet werden.

Die Neuerung der Erfindung besteht darin, das Problem der Entfernung von Störobjekten mittels der Verwendung von Bildsegmenten zu lösen. Für die Raumplanung sind grundsätzlich alle Einzelschritte manuell oder mittels eines sogenannten Wizards durchführbar. Ein Wizard versucht Informationen automatisch zu extrahieren und der Benutzer kann Ergebnisse bestätigen, bzw. durch die Angabe weiterer Informationen verbessern. Z.B. Kann ein Wizard Störobjekte identifizieren und deren Konturen kennzeichnen. Der Benutzer kann dann ggf. die Konturen verbessern.

Zusammenfassend besteht eine Grundidee der Erfindung in der Kombination von Sensorhinweisen bzw. Sensordaten hinsichtlich der Sensorposition relativ zur dargestellten Realität (z.B. radar- oder kamerabasierter 3D-Rekonstruktionsdaten) mit 2D-Segmentierungsverfahren für Entfernung von Störobjekten.

Die Erfindung kann nicht nur für die Raumplanung, sondern auch für andere AR-Anwendungen, zum Beispiel ein AR-Navigationssystem im Fahrzeug verwendet werden.

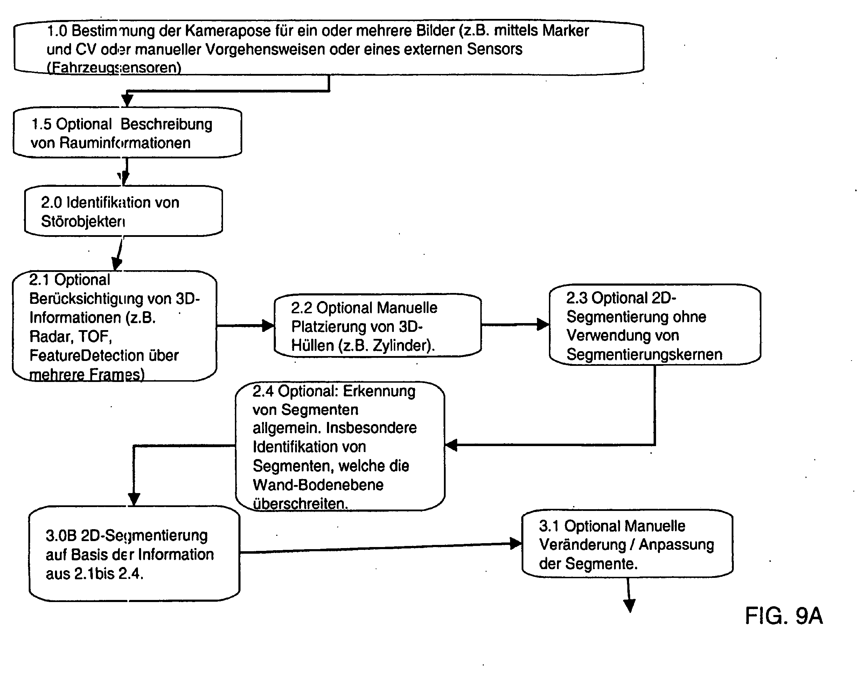

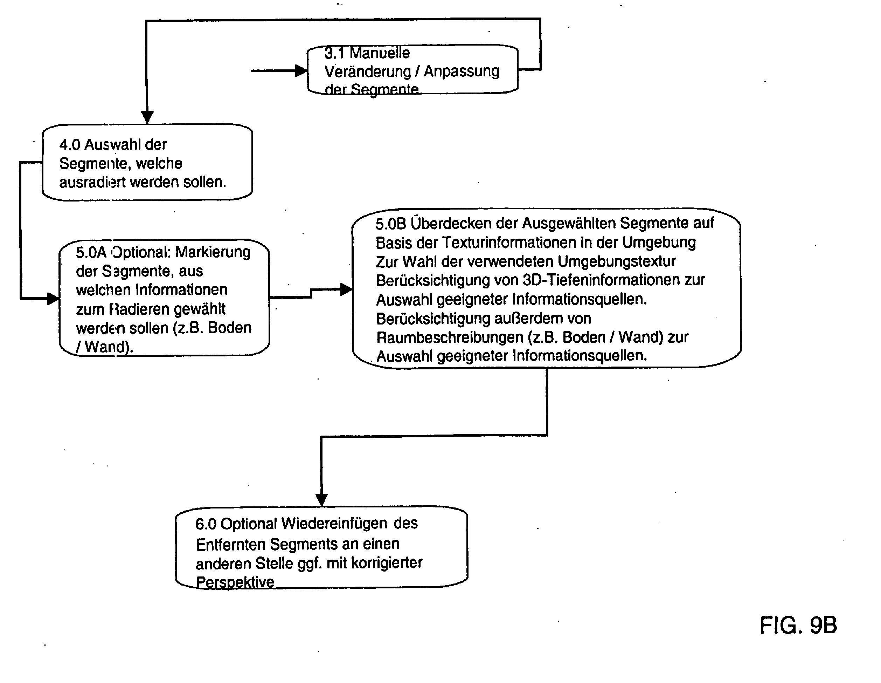

Im Folgenden soll anhand des Flussdiagramms gemäß Figuren 9A und 9B eine Ausführungsform der Erfindung im Zusammenhang mit den beispielhaften Szenerie-Ansichten bzw. -Darstellungen der Figuren 1 bis 8 erläutert werden.

### Randbedingungen:

Im Folgenden werden die Informationen erläutert, welche dem System zu Verfügung stehen.

### Brennweite (Focal Length):

Die Brennweite betrifft die internen Kameraparameter der Kamera, die zur Aufnahme der realen Umgebung verwendet wird. Die Feststellung der Brennweite kann mittels Selbst-Kalibrierung erfolgen. Alternativ kann sie aus sogenannten Exif-Daten bzw. einer Kameradatenbank gewonnen werden. Falls die Exif-Daten unvollständig sind, zum Beispiel nur die Brennweite in mm, aber nicht die Chipgröße angegeben ist, kann aus der Datenbank auch nur die Chipgröße gewonnen werden. Ansonsten kann ein Durchschnittsbrennwert von Digitalkameras angenommen werden. Alternativ kann die Brennweite aus Fluchtpunktinformationen gewonnen werden. Dabei markiert der Benutzer z.B. zwei in der Realität parallele Geraden. Aus dem Fluchtpunkt kann die Brennweite berechnet werden. Die markierten Geraden sollten dabei durch Computer-Vision-Verfahren sehr genau an die tatsächlichen Geraden im Bild angepasst werden. Vorteilhafterweise kann die Brennweite auch aus mehreren Bildern, falls mehrere Bilder zur Verfügung stehen, errechnet werden.

### Verzerrung (Distortion):

Die Verzerrung des Kamerabildes kann im Idealfall angegeben werden und das Bild kann digital korrigiert werden oder die Werte können bei Berechnungen jeweils berücksichtigt werden. Es können zum Beispiel bekannte Korrekturwerte nach Zhang oder Luhmann angegeben werden. Sind keine Korrekturwerte bekannt, können Autokalibrierungsansätze greifen. Alternativ kann der Benutzer interaktiv durch Verändern von Parametern im Bild gekrümmte, in der Realität gerade Bildelemente "geradeziehen" (Parkett, Wand-Boden-Übergang, etc.). Für die Korrektur der Verzerrung können insbesondere Informationen des Benutzers über Geraden, wie Raumgrenzen oder Geraden aus der Brennweiten-Bestimmung, verwendet werden.

### Extrinsische Parameter:

Für die Ermittlung der extrinsischen Kameraparameter, das heißt der Position und Orientierung der Kamera im Raum, können unterschiedliche Verfahren verwendet werden:
- Markertracking (Quadrat oder eine eingelernte Textur),
- Manuelles "Einklichen" über ein Bild bei bekannien Skalen (Deckenhöne, etc.),
- Lernen von Bildmerkmalen (Features) (manuell oder automatisch) und deren 3D-Position über mehrere Bilder und Verwendung für Bilder, in denen kein Marker mehr sichtbar ist,
- Als Spezialfall von Feature-Lernen die Verwendung von Wand- oder Bodeninformationen, bzw. die Korrektur der 3D-Feature-Positionen.

Im Falle der Ausprägung der Erfindung, bei welcher ein optisches, halbdurchlässiges Element zur Darstellung der virtuellen Objekte verwendet wird, ist zusätzlich der Offset der Kamera zur virtuellen Kamera bekannt, welche das Auge und das halbdurchlässige Display aufspannen. Dabei ist davon auszugehen, dass dieser Offset sehr gering ist und zum Beispiel mit aus dem Stand der Technik bekannten, Optical-Seethrough-Kalibrierungsverfahren bestimmt wird. Im Falle reiner 2D-Segmente werden diese mittels aus dem Stand der Technik bekannten Annäherungen in die virtuelle Kamera transformiert. Virtuelle oder aus der Realität gewonnene 3D-Objekte können korrekt transformiert werden.
Idealerweise ist ein Optical-Seethrough-Display zusätzlich mit einem Mechanismus ausgestattet, welcher, idealerweise pro darstellbares Pixel, gegenüber von außen kommenden Lichtstrahlen völlig intransparent geschaltet werden kann.

### Bildvorverarbeitung:

Vorteilhafterweise können die Bilddaten, welche von dem System verarbeitet werden sollen, in einem ersten Schritt überarbeitet werden.

### Bodenebene:

In den meisten (aber nicht allen) Fällen ist annehmbar, dass eine annähernd planare Bodenebene existiert, auf der der Marker (falls vewendet) planar liegt.

### Prozessbeschreibung

Schritt 1.0 gemäß Fig. 9A (Bestimmung der Kamerapose für ein oder mehrere Bilder, z.B. mittels Marker und Computer-Vision oder mittles manueller Vorgehensweisen oder mittels eines externen Sensors (z.B. Fahrzeugsensoren)):
In einem ersten Schritt 1.0 wird bei jedem AR-System die Pose des Aufnahmegeräts (hier der Kamera) im Raum bestimmt. Dies kann mittels einer Markierung, welche sich im Raum befindet (vgl. Marker 4 in Fig. 1-8), oder mittels eines externen Sensors (z.B. mechanisches Tracking), mittels markerloser Trackingverfahren oder mittels eines einfachen manuellen Prozesses ermittelt werden.

### Schritt 1.5 (Ggf. Beschreibung von Rauminformationen):

Ein hilfreicher Bestandteil dieser Erfindung im Vergleich zu anderen Verfahren ist die Berücksichtigung der Tatsache, dass für den Fall der Einrichtungsplanung oft Wände im Bild vorhanden sind. Es wird angenommen, dass die Wände annähernd planar sind. Es wird weiterhin angenommen, dass die Wände orthogonal zur Bodenebene angeordnet sind.

In einem ersten Schritt teilt der Nutzer dem System Informationen zu Wänden im Bild mit:
- Im einfachsten Fall können Wände bzw. die Bodenebene durch Polygone beschrieben werden, welche sich aus einzelnen Eckpunkten zusammensetzen, welche der Benutzer mit der Maus im Bild markiert.
- Wände können vom Benutzer mittels des Ziehens eines Koordinatensystems und Platzierung in der "Ecke" definiert werden. Die Länge der jeweiligen Wand kann für Spezialfälle (freistehende Wand) einstellbar sein. Ansonsten ergeben sich die Wände der Szene aus Wand-Schnitten.
- Alternativ kann der Benutzer Wand-Polygone an die einzelnen Ecken "ziehen". Vorteilhafterweise kann ein Bildverarbeitungsalgorithmus die Anordnung der Wandebene mittels Kantenerkennung nachjustieren. Ebenso können Türen gekennzeichnet werden.
- Alternativ können automatische Boden-Wand-Ebenen Extraktionsverfahren eingesetzt werden (Wand-Wizard). Ein einfacher Wizard könnte zum Beispiel alle geraden Kanten im Bild vorschlagen (zum Beispiel durch den Einsatz des Hough-Transforms).

### Schritt 2.0 (Identifikation von Segmenten):

Bei Raumplanungsszenarien geht es darum, Segmente zu erkennen und festzustellen, welche die Bodenebene, die Wandebene oder andere Objekte darstellen. Bei AR-Fahrzeugnavigation ist es interessant zu erkennen, welche Segmente die Fahrbahn, weitere Fahrzeuge oder sonstige Objekte darstellen. Die einzelnen Unterschritte 2.1 bis 2.4 liefern Initialisierungsinformationen, welche in Schritt 3.0 in einen 2D-Segmentierungsansatz eingehen. Bei der Kombination von automatischen Verarbeitungsschritten, wie Schritt 2.1, mit manuellen Schritten, wie Schritt 2.2, spricht man von einem sogenannten hybriden Ansatz.

Schritt 2.1 (Berücksichtigung von 3D-Informationen, z.B. Radar, "Time Of Flight" (TOF), Feature-Detektion über mehrere Frames (Bilddatensätze)):
Die spätere 2D-Segmentierung ist effektiver, wenn sie pro Störobjekt eine Vorder-/Hintergrundunterscheidung macht. Um aus den 3D-Daten Störobjekte zu unterscheiden, können Cluster-Algorithmen angewandt werden (siehe unten zu "Clustering"). Von Clustering spricht man, wenn initial keine Klassen bekannt sind. Die 3D-Informationen dienen dann als Initialisierung für eine 2D-Segmentierung, zum Beispiel mittels Graph-Cuts.

### Lernbasierte Ansätze:

Es könnten lernbasierte Ansätze zur 3D-Identifikation von Störobjekten eingesetzt werden, welche vorher vom System aus einer Menge von Beispielen gelernt werden. Es könnte zum Beispiel eine Datenbank mit unterschiedlichen Möbeln oder Primitiven erstellt werden. Hilfreich ist dabei eine Einschränkung der Freiheitsgrade, da die Möbel meist (außer bei an der Wand hängenden Regalen) nur auf der Bodenebene verschiebbar sind. Vielleicht könnten so zumindest einfache Möbel, welche zum Beispiel durch 3D-Rechtecke annäherbar sind, automatisch passend gemacht ("gematched") werden (Zustandsvektor Pos-x, Pos-y, Rot-Z, x-Größe, y-Größe, z-Größe).

### 3D-Features:

Feature-Anpassung (sog. Feature-Matching, z.B. mittels SURF oder SIFT oder Wide-Angle Feature-Descriptoren) kann über mehrere Bilder hinweg, bei Stereokameras aus einem Bild, vorteilhafterweise feststellen, ob sich ein Punkt auf der Bodenebene, oder nicht, befindet. Falls nicht, kann der 3D-Punkt als Grundlage für ein sogenanntes Thresholding dienen, beziehungsweise als Grundlage für andere 2D-Segmentierungsverfahren dienen. 3D-Punkte aus Feature-Matching, können auch unabhängig von Informationen über die Bodenebene in Cluster-Algorithmen eingehen und dann als Grundlage für 2D-Segmentierungsverfahren dienen. Die Berechnung der 3D-Position kann zum Beispiel über Triangulation oder Structure from Motion-Verfahren oder Optical Flow erfolgen.

### Objekte als Störfaktoren in Prämissenbildern:

Für diesen Ansatz werden mindestens zwei Bilder benötigt, die beide den selben Marker und das zu entfernende Objekt beinhalten. Zunächst wird ein Bild als Referenzbild ausgewählt. Basierend auf der mittels der Marker bestimmten KameraPosen werden die restlichen Bilder so transformiert, dass die Ebene, in der der Marker liegt, in allen Bildern übereinstimmt. Anschließend wird das Differenzbild zwischen dem Referenzbild und jedem transformierten Bild gebildet. Da die Markerebenen in allen Bildern übereinstimmen, sind diese in den jeweiligen Differenzbildern nicht sichtbar. Es ist somit möglich, zwischen Boden (Markerebene) und Objekten (im Referenzbild sichtbar) zu unterscheiden.

Bei diesem Ansatz treten dabei unter anderem folgende Probleme auf:
- Falls der Boden (Markerebene) texturiert ist und die Kamera-Pose bzw. die Abbildung zwischen den Bildern nicht exakt bestimmt wird, so wird bei Verwendung von Differenzbildern basierend auf der pixelweisen Grauwert-Differenz möglicherweise der gesamte Boden (oder Teile davon) als Störfaktor markiert. Die Verwendung von komplexeren Differenzmaßen, wie die Differenz des lokalen Farb-/Grauwert-Histogramms, scheinen hier vielversprechender zu sein.
- Falls ein Objekt (großflächig) einfarbig ist, so wird dieses im Differenzbild nur teilweise als Störfaktor sichtbar, da Teile des Objekts auch im transformierten Bild auf das Objekt selber abgebildet werden können. Es ist aber trotzdem denkbar, diesen Teil als Initialisierung für eine Segmentierung (z.B. mittels sog. Graph-Cuts) zu verwenden.

### Sensoren:

Die Erfindung ist nicht nur für die Einrichtungsplanung sondern zum Beispiel auch für AR im Fahrzeug sinnvoll. Hier können Sensoren, wie sogenannte Time-of-Flight-Kameras oder Radar Hinweise zu realen Objekten und deren Tiefe liefern. Meist sind die Sensorinformationen für eine visuelle Darstellung allerdings viel zu verrauscht oder zu gering aufgelöst. Daher sollte ein späterer 2D-Segmentierungsschritt in 3.0 folgen.

### Eine Bodenebene mit dazu senkrecht stehenden Flächen:

Unter der Bedingung, dass es eine Bodenebene gibt und alle restlichen Ebenen/Flächen senkrecht zu dieser Ebene stehen, kann das in "Efficient Monocular 3D Reconstruction from Segments for Visual Navigation in Structured Environments" (P.E. López-de-Ternel, A. Ruiz, L. Femandez, 18th International Converence on Pattern Recognition, 2006, pp. 143-146) beschriebene Verfahren verwendet werden.

Hierbei werden zunächst die Kanten im Bild extrahiert und eine Repräsentation der lokal vorhandenen Farben auf beiden Seiten der Kante erstellt (siehe "Real-time Extraction of Colored Segments for Visual Navigation" von López-de-Teruel, Ruiz, García-Mateos, García, Buchreihe: Lecture Notes in Computer Science, Springer Berlin/Heidelberg, Volume 2626/2003, Buch: Computer Vision Systems: Third International Converence, Graz, Austria, April 1-3, 2003, Proceedings). Unter Verwendung dieser Farbinformationen werden die Kanten anschließend gemeinsamen Flächen zugewiesen. Anhand der oben gemachten Einschränkungen kann nun die Position der jeweiligen Flächen berechnet werden. Selbstverständlich kann auch eine Kombination der beschriebenen Verfahren genutzt werden.

### Nachkonstruieren (siehe "GoogleSketchUp"):

Das Möbelstück wird dreidimensional vom Benutzer nachgebildet und kann mittels Kantenanpassung (Kantenmatching) automatisch im Bild gesucht werden. Eine manuelle Einschränkung des Suchbereichs durch den Benutzer wäre vermutlich vorteilhaft.

### Schritt 2.2 (manuelle Platzierung von 3D-Hüllen (z.B. Zylinder)):

Optional könnte der Benutzer Störobjekte markieren und den Hintergrund markieren. Dann können 3D-Informationen jeglicher Form diesen Klassen zugeordnet werden. Man spricht dann von Klassifizierung.

Ein "Störobjekt", welches mit einem der Verfahren in einem Bild identifiziert wurde, kann oft auch in anderen Bildern identifiziert werden. Nun wäre es hilfreich automatisch eine Zuordnung zu finden:
- Welche der Störobjekte wollte der Benutzer in der Szene entfernt haben, welche nicht;
- bzw. welche Grenzfälle sind eventuell in einem anderen Bild deutlicher als Störobjekt identifiziert worden;
- bzw. können beschleunigende Initialisierungen aus anderen Bildinformationen wiedergewonnen werden?

Ein Ansatz hierzu könnte die grob ermittelbare Position des Störobjekts auf der Bodenfläche sein. Sollten für einen halbautomatischen Prozess mehrere Bilder benötigt werden, kann mittels der Kameraposen die Bild-Auswahl für den Benutzer erleichtert werden. So könnte der Benutzer in einem Bild ein Störobjekt identifizieren. Das System könnte dem Benutzer automatisch ein für den Prozess ideal geeignetes Zusatzbild anzeigen (z.B. orthogonal zur ersten Ansicht).

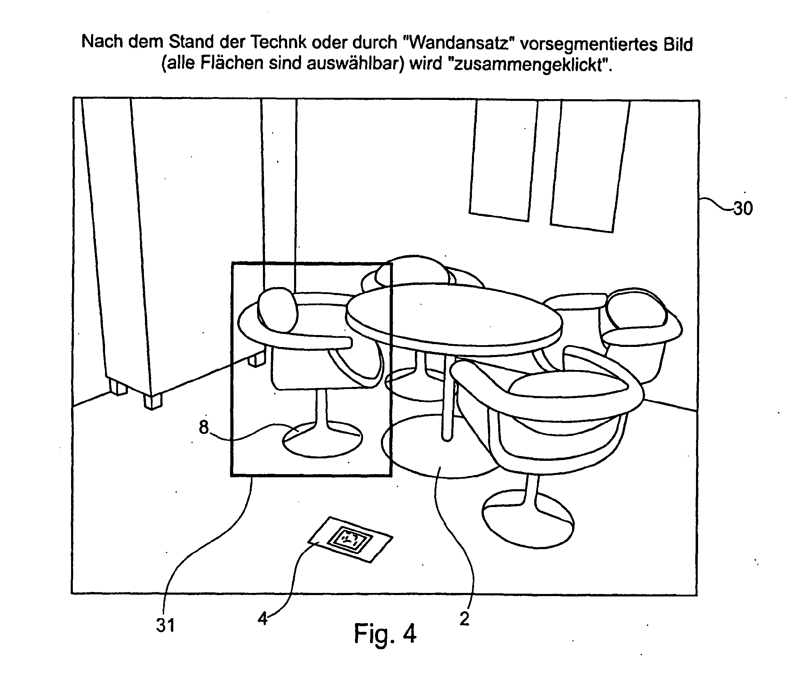

In Fig. 4 erfolgt dies beispielsweise mittels eines Rechtecks 31, das vom Benutzer in der Darstellung 30 über ein Störobjekt in Form eines Stuhls 8 "gestülpt" oder angeordnet wird. Es sind in diesem Zusammenhang auch andere geometrische Formen denkbar, wie etwa Kreis-, elliptische Formen oder daraus abgeleitete Formen. Der Stuhl 8 wird dann anhand dieser Auswahl segmentiert.

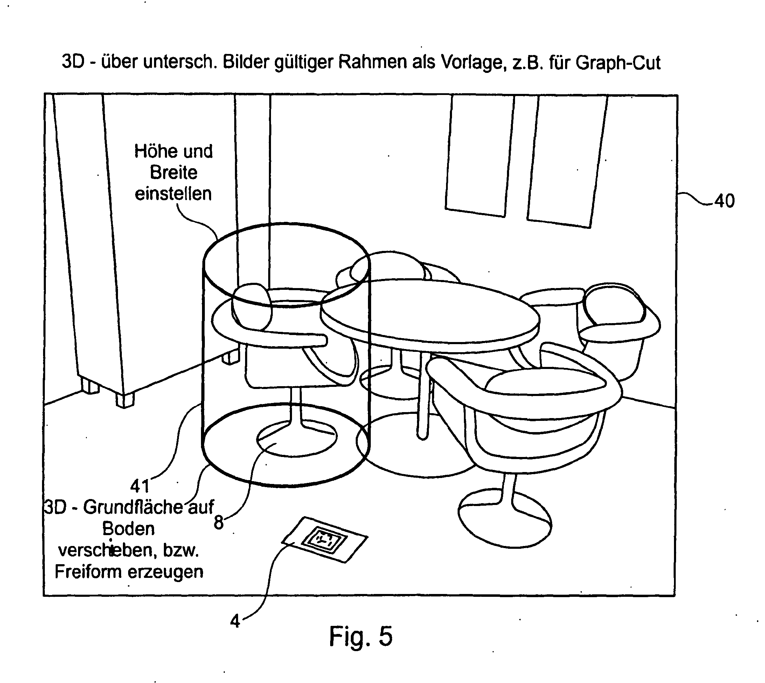

In Fig. 5 erfolgt die Segmentierung beispielsweise mittels eines Zylinders 41, der vom Benutzer in der Darstellung 40 über ein Störobjekt in Form eines Stuhls 8 "gestülpt" oder angeordnet wird. Es sind in diesem Zusammenhang auch andere geometrische Formen denkbar, wie etwa Quader-, elliptische Hüllformen oder daraus abgeleitete Formen. Der Stuhl 8 wird dann anhand dieser Auswahl segmentiert.

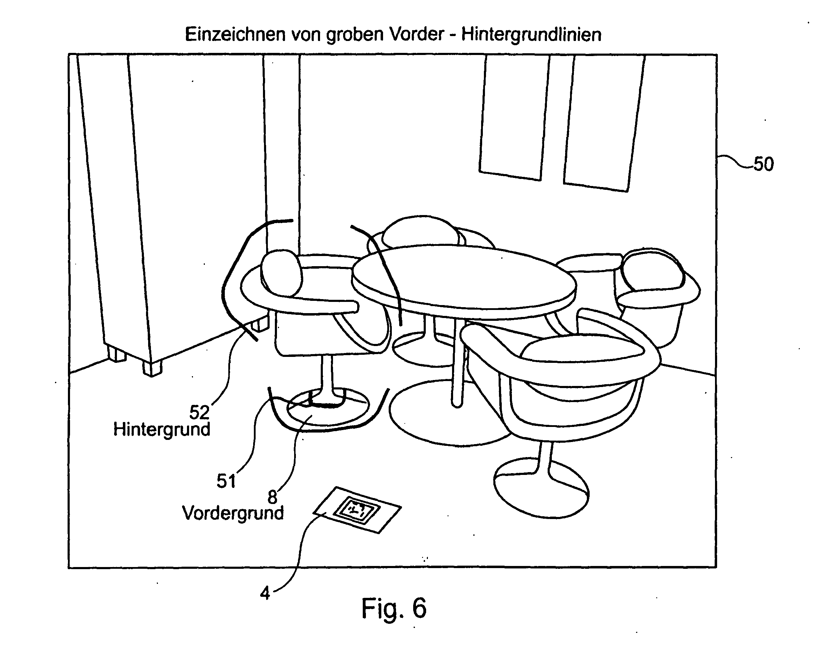

In Fig. 6 wird der Stuhl 8 in der Ansicht 50 über Vordergrund-Linien 51 zur Kennzeichnung eines Vordergrunds und über Hintergrund-Linien 52 zur Kennzeichnung von Hintergrund segmentiert. Über die Anordnung der Linien ist für das Datenverarbeitungssystem erkennbar, welche Bildbestandteile zum Objekt in Form des Stuhls 8 (Vordergrund) gehören und entsprechend segmentiert werden können.

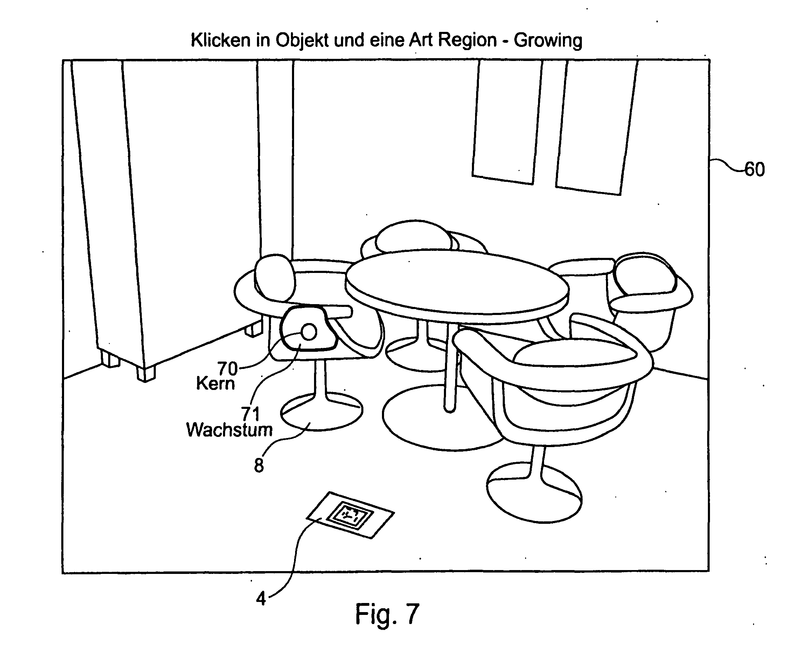

Hierzu ist in Fig. 7 eine Ausführungsform einer Ansicht 60 dargestellt, in welcher ausgehend von einem Kern 70 ein Wachstumsbereich 71 ausgeht, um das Objekt in Form des Stuhls 8 zu segmentieren (z.B. mittels "Klicken" in das Objekt 8 und sog. Region-Growing, siehe unten).

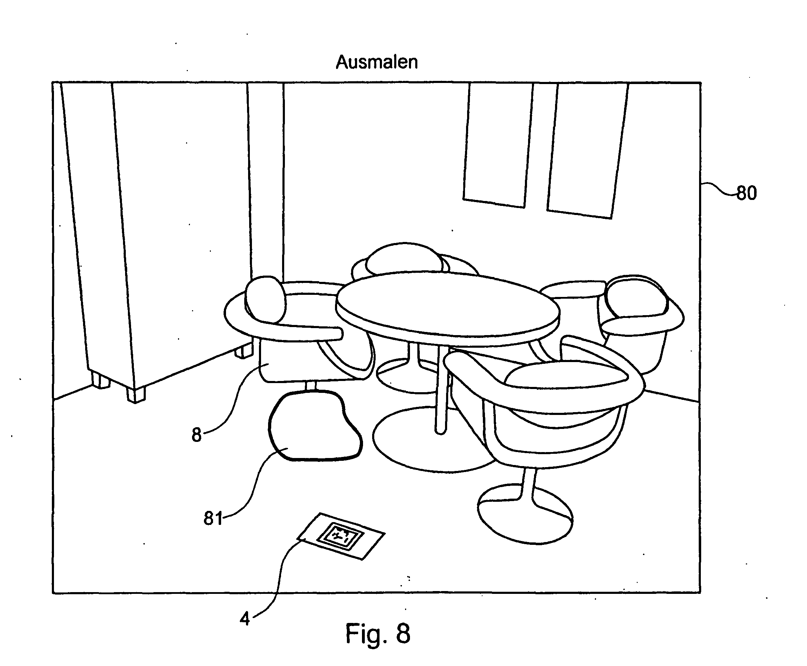

In Fig. 8 ist dargestellt, wie in einer Ansicht 80 eine Segmentierung des Stuhls 8 manuell durch "Ausmalen" eines Bereichs 81 vorgenommen werden kann.

Schritt 2.3 (2D-Segmentierung automatisch ohne Verwendung von Segmentierungskemen):
Grundsätzlich ist es auch möglich, den Prozess mit einem automatischen Segmentierungsprozess, ohne Verwendung von zusätzlichen Informationen durchzuführen. Diese Informationen können dann in 3.0 mit den Ergebnissen aus 2.1 fusioniert werden.

### "Level Sets"

Segmentierung wird durch Veränderung einer Funktion durchgeführt, die den Umriss des Objekts beschreibt.

(siehe "Fast Marching Methods and Level Set Methods for Propagating Interfaces.pdf", J. A. Sethian, von Karman Institute Lecture Series, Computational Fluid Mechanics, 1998)

### "Split and Merge":

Beim "Region Merging" wird das Bild in sehr kleine Bildbereiche (z.B. 2x2 Pixel) zerlegt und es werden anschließend benachbarte Bereiche, die homogen zueinander sind, wieder zusammengefügt. Beim "Region Splitting" wird das Bild zunächst als ein ganzer Bereich betrachtet und dieser anschließend schrittweise zerlegt, bis jeder Bereich homogen ist. Beim "Split und Merge" werden beide Ansätze kombiniert, zunächst wird das Bild solange unterteilt, bis alle Bereiche homogen sind, anschließend werden benachbarte Bereiche wieder zusammengefügt, falls das das Homogenitätskriterium nicht verletzt.

### "Watersheds":

Das (Grauwert-)Bild wird als Höhenkarte mit Höhen und Senken interpretiert. Es wird nun sozusagen Wasser in diese Höhenkarte gefüllt, wodurch sich unterschiedliche zusammengehörige Regionen bilden. Für das "Auffüllen mit Wasser" gibt es zwei verschiedene Ansätze, die im Folgenden kurz vorgestellt werden.

### "Rainfall":

Platziere einen Regentropfen auf jedem unmarkierten Pixel. Lasse den Regentropfen entsprechend der Steigung der Farbwerte in ein lokales Minimum "fliessen". Markiere jeden durchlaufenen Pixel mit dem Label des Minimums.

### "Flooding":

Starte mit dem geringsten Farbwert (Grauwert) und erhöhe den "Wasserspiegel" Schritt für Schritt. Hierdurch wird die Landschaft langsam überflutet. Sobald zwei Becken beginnen zu verschmelzen, errichte einen Damm an der Grenze der beiden Becken um dies zu verhindern. Somit erhält man am Ende eine Segmentierung.

Schritt 2.4 (Erkennung von Segmenten allgemein. Insbesondere Identifikation von Segmenten, welche die Wand-Bodenebene überschreiten) in Verbindung mit Fig. 2A und 2B:
Geht man in der Szenerie 10 gemäß Fig. 2A von einer Bodenebene 17 mit Wänden 18 aus und sind diese Ebenen identifiziert, kann ein Wizard alle Objekte identifizieren, welche die Grenze zwischen Boden und Wand durchbrechen. Dazu kann entweder vorher eine Flächensegmentierung durchgeführt werden und können die Flächen mit den Geraden 19 geschnitten werden. Alternativ kann eine Gradientenbeobachtung entlang der Geraden 19 stattfinden und abweichende Minderheiten-Einheiten in Kombination mit ähnlichen Farben auf beiden Ebenen als Wachstumskerne für Segmentierungen verwendet werden.

In Fig. 2B sind die Stellen mit Bezugszeichen 16 gekennzeichnet, an den Gegenstände der realen Umgebung die Geraden 19, d.h. den Übergang zwischen Wand- und Bodenebene, schneiden. Dies ist ein Hinweis dafür, dass sich an dieser Stelle Objekte befinden, die für eine spätere Radierung segmentiert werden können. Diese Geradenabschnitte können dann zum Beispiel in einen Graph-Cut-Algorithmus als Vordergrund eingehen.

Schritt 3.0 (2D-Segmentierung auf Basis der Information aus 2.1, ggf. mit Unterstützung von Schritten 2.2 bis 2.4):
Für die 2D-Segmentierung kommen unterschiedliche Ansätze in Frage, dabei können diese Ansätze vorteilhafterweise durch Ansätze zur Extraktion von Schatten in einem Bild kombiniert werden, um Schattensegmente als Verdeckungssegmente auszuschließen. Desweiteren können die Ansätze auch mehrfach pro Bild angewandt werden, wenn mehrere Störobjekte im Bild erwartet werden, zum Beispiel gekoppelt an die Anzahl der Cluster.

### "Graph Cuts":

Aus dem Bild wird ein Graph aufgebaut, bei dem die Knoten aus den einzelnen Pixel bestehen und zwei zusätzliche Knoten für Objekt und "nicht Objekt"/Hintergrund eingefügt werden. Hierbei ist jeder Pixel mit seinen Nachbarpixeln (4er Nachbarschaft) und mit den beiden zusätzlichen Knoten verbunden. Es wird nun versucht, den Graphen so aufzuteilen, dass der Objekt-Knoten nur mit Pixeln des Objektes und der Hintergrund-Knoten mit den restlichen Pixeln verbunden ist. Als Objektpixel oder Hintergrund-Pixel können nun in das Bild abgebildete 3D-Informationen angenommen werden. Da es mehrere Störobjekte geben kann, kann das Graph Cut-Verfahren auch mehrfach auf einem Bild angewandt werden.

C. Rother, V. Kolmogorov and A. Blake, "Interactive Foreground Extraction using Graph Cuts", ACM Transactions on Graphics, 2004

A. Blake, C. Rother, M.Brown, P.Perez, and P. Torr, " Interactive image segmentation using an adaptive GMMRF model", Proc. Eur. Conf. on Computer Vision, ECCV (2004)

### Snakes":

Segmentierung mittels eines deformierbaren Modells. Es werden dabei drei Kostenfunktionen minimiert:
- interne Energie: basiert nur auf der Snake selber -> in der Regel um einen "glatten" Verlauf der Linien/des Modells zu erhalten,
- externe Energie: basiert auf den Bildwerden -> in der Regel abhängig vom Gradienten (Snake wird zu Kanten hingezogen),
- "Balloonforce": sorgt dafür, dass das Modell nicht in sich kolabiert (sich auf einen Punkt zusammenzieht).

M. Kass, A. Witkin and D. Terzopoulos, "Snakes: Active Contour Models", International Journal of Computer Vision, pp. 321-331, 1987, Volume 1, Number 4

"Thresholding / Adaptive Thresholding / Color Thresholding":

Es werden Grenzwerte für die Bildwerte festgelegt. Besitzt ein Pixel einen Bildwert innerhalb des festgelegten Bereichs, so wird dieser dem Objekt zugeordnet ansonsten nicht. Die Bestimmung der Grenzwerte kann automatisch anhand des Histogramms oder durch Benutzerinteraktion (Histogramm oder Markierung einer Bildregion) erfolgen.

### "Region Growing" (vgl. Fig. 7):

Es wird ein Startpunkt im Bild gewählt (automatisch oder manuelle) und von diesem ausgehend weitere Pixel aus seiner Nachbarschaft zu einer Warteschlange hinzugefügt, falls sie ein Homogenitätskriterium erfüllen (innerhalb eines Thresholds etc.). Diese Warteschlange wird schrittweise abgearbeitet und jeweils die Nachbarschaft des aktuellen Pixels betrachtet. Pixel, die das Homogenitätskriterium erfüllen werden zum gesuchten Objekt hinzugefügt.

### "Live Wire / Live Lane / Adaptive Lane":

Das Bild wird als ungerichteter Graph aufgefasst, wobei jeder Pixel einem Knoten entspricht. Der Benutzer gibt nun eine Freiformlinie vor (per Maus), aus der anschließend ein Pfad mit minimalen Kosten innerhalb des Graphen gesucht wird, der die beiden Endpunkte der Linie verbindet. Die Kosten einer Kante werden dabei so gewählt, dass bevorzugt Kanten als Pfad gewählt werden. Dies entspricht dem Live-Wire-Ansatz, beim Live-Lane/Adaptive-Lane-Ansatz wird der Suchbereich für die Suche nach dem Pfad mit minimalen Kosten auf die Umgebung der vorgegebenen Linie beschränkt. Die Größe der Umgebung kann dabei z.B. entsprechend der Geschwindigkeit der Mausbewegung gewählt werden.

E. Mortensen, B. Morse, W. Barrett, J. Udupa, "Adaptive boundary detection using 'live-wire' two-dimensional dynamic programming", Proceedings of Computers in Cardiology, 1992

### Hybrid-Ansätze:

Kombinationen aus vorherigen Methoden ("einfache" Ansätze zur Initialisierung von komplexeren Methoden).

### Schritt 3.1 (manuelle Veränderung / Anpassung der Segmente):

Sollten bei den automatischen oder semi-automatischen Abläufen Fehler aufgetreten sein, können diese mittels einfacher manueller Eingriffe, wie zum Beispiel, Malen mit der Maus verändert werden. Dies ist natürlich nicht bei jeder Anwendung möglich oder sinnvoll (z.B. bei AR im Fahrzeug).

Es folgen nun die unterschiedlichen Schritte gemäß einer Ausführungsform der Erfindung in Bezug auf "Radieren der Umgebung":

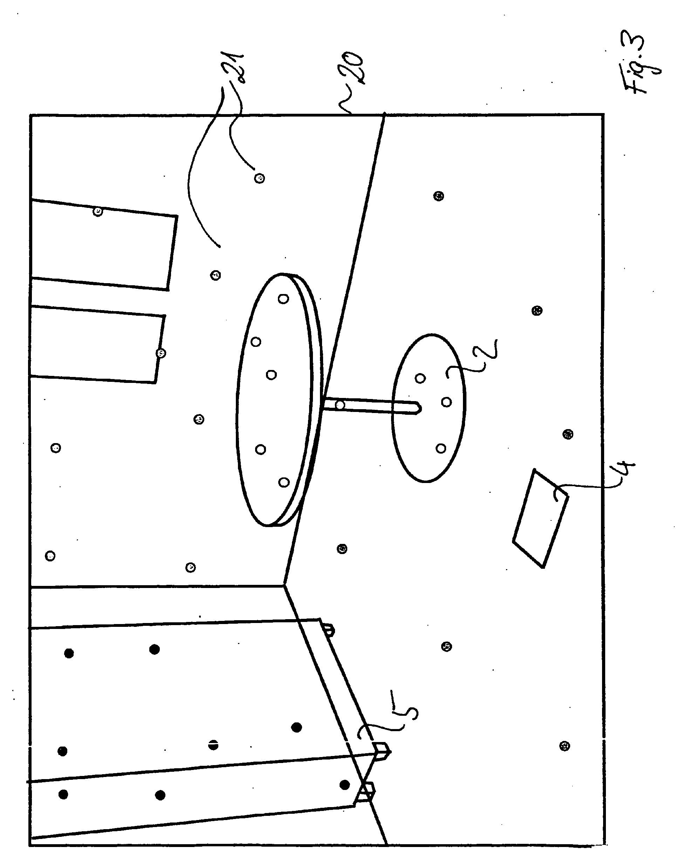

In Fig. 3 ist zunächst in schematischer Darstellung ein Schritt zur dreidimensionalen Segmentierungsinitialisierung anhand von Bildmerkmalen (Features) 21 gezeigt. Diese werden von einem entsprechenden Detektionsalgorithmus aus dem Bild 20 extrahiert.

Desweiteren kann, falls auf Grund des Anwendungsszenarios von einer Bodenebene ausgegangen werden kann, auf Basis der Position des untersten Segment-Pixels auf der Bodenebene auf die Tiefe bezüglich der Bodenebene geschlossen werden.

Ausführungsform bezüglich Radieren der Umgebung, Verschieben vorhandener Objekte und Verändern der Farben / Texturen:
Ein möglicher Einsatz der Erfindung ist die Veränderung eines Raumes, zum Beispiel um in diesem Raum virtuelle Einrichtungsgegenstände zu platzieren, wofür man freien Raum benötigt. Ein Vorteil der AR-Technologie ist die Betrachtung von Gegenständen in ihrer realen Umgebung, zum Beispiel die Betrachtung eines Holztisches auf einem vorhandenen Holzboden oder vor einem vorhandenen Schrank. Daher ist es sinnvoll nicht rein virtuell zu arbeiten, sondern störende reale Möbelstücke aus der Szene zu entfernen oder Ihre Position im Raum zu verändern, ohne sie manuell bei Seite räumen zu müssen.

Schritt 4.0 (Auswahl der Segmente, welche ausradiert werden sollen):
Sind Störobjekte segmentiert, kann der Nutzer auswählen, welche entfernt werden sollen (zum Beispiel durch Klicken in das entsprechende Segment). Die Informationen sollten auf Basis der Tracking-Informationen möglichst über mehrere Bilder verwendet werden.

Schritt 5.0A (Markierung der Segmente, aus welchen Informationen zum Radieren gewählt werden sellen (z.B. Boden/Wand)).

Die Überdeckung realer Objekte erfolgt, vereinfacht ausgedrückt, durch das Überdecken mit optischen Strukturen aus der "Nachbarschaft". Hierbei können im Rahmen dieser Erfindung zusätzliche Informationen (zum Beispiel die Raumbeschreibung) die Qualität der Ansätze erhöhen.

Man sollte dem Benutzer auch manuell die Chance geben, dem Algorithmus Hinweise zu geben, aus welchem Bereich dieser Texturinformationen zum überschreiben verwenden soll. Zum Beispiel, kann ein Wizard dem Benutzer zeigen, welche Bildbereiche für die Texturierung des gesamten oder Teile des entfernten Bildbereichs verwendet werden könnten. Der Benutzer kann aus diesen Bildbereichen dann auswählen. Außerdem könnte der Benutzer dem Algorithmus zusätzlich Kanten vorgeben, die bei der Texturierung berücksichtigt werden sollen.

Schritt 5.0B (Überdecken der ausgewählten Segmente auf Basis der Texturinformationen in der Umgebung (bevorzugt Gewählte). Berücksichtigung außerdem von 3D-Tiefeninformationen zur Auswahl geeigneter Informationsquellen. Berücksichtigung außerdem von Raumbeschreibungen (z.B. Boden / Wand) zur Auswahl geeigneter Informationsquellen):
Ist das zu entfernende Störobjekt in einem vorhergehenden Schritt vom Benutzer ausgewählt und dessen Umriss bekannt, so wird nun eine Texturersetzung des Objektbereichs durchgeführt. Die nicht vom Objekt bedeckte Fläche des Ursprungsbildes dient hierfür als Quelle, um den entfernten Bildbereich aufzufüllen. Um eine möglichst realistische Ersetzung zu ermöglichen, können folgende Zusatzinformationen verwendet werden:
   - 2D-Kanteninformationen des Bildes können dafür genutzt werden, um eine realistische Fortführung von teilweise verdeckten Objektgrenzen zu ermöglichen. Die 2D-Kanten werden dabei entsprechend ihrer Richtung fortgeführt.
   - 3D-Kanteninformationen können dafür genutzt werden, dass Schnittpunkte von Objektgrenzen oder sonstigen Kanten korrekt berechnet werden können.
   - Eine Unterteilung/Segmentierung des Ursprungsbildes in Einzelbilder, die die Textur einzelner Wände, des Bodens oder von anderweitigen Objekten enthalten, können für eine realistische Texturierung der entsprechenden Bildbereiche verwendet werden, von denen diese überdeckt werden. Zum Beispiel sollte die Wand nie mit Boden-Texturen gefüllt werden. Ebenfalls sollte der Boden nicht mit Texturen gefüllt werden, deren Ursprung an der Position anderer, bekannter Objekte liegt.

Stehen mehrere Bilder zur Verfügung, so soll das System das Störobjekt aus allen Ansichten möglichst automatisch entfernen. Aus dem Stand der Technik sind zum Beispiel folgende "Inpainting"-Mechanismen bekannt, welche mit Schritten 5.0A und 5.0B kombiniert werden können:
"Object Removal by Exemplar-Based Inpainting" von A. Criminisi, P. Pérez, K. Toyama, Jun. 2003, Madison, WI Proc. IEEE Computer Vision and Pattern Recognition
"PatchWorks: Example-Based Region Tiling for Image Editing" von P. Pérez, M. Gangnet, A. Blake, Microsoft Research Report TR-2004-04, (2004)
"Inference of Segmented Color and Texture Description by Tensor Voting" von Jiaya Jia, Chi-Keung Tang, IEEE Transactions on Pattern Analysis and Machine Intelligence, June 2004, Volume 26, Issue 6, pp. 771-786
"Image Inpainting" von M. Bertalmio, G. Sapiro, V. Caselles, C. Ballester, Proc. Of SIGGRAPH 2000, pp. 417-424, New Orleans, USA, July 2000

Dies sind Algorithmen, welche Umgebungsinformationen nutzen und versuchen, die Ersetzung möglichst geschickt durchzuführen. Zum Beispiel versuchen einige, Kanten in der Umgebung weiterzuführen. Dabei können die Informationen aus Schritten 5.0A und 5.0B zusätzliche Hilfe leisten.

Schritt 6.0: Optional Wiedereinfügen des Entfernten Segments an einer anderen Stelle ggf. mit korrigierter Perspektive.

Ein weiterer Vorteil dieser Erfindung ist nicht nur die Möglichkeit, zum Beispiel bei der Einrichtungsplanung, störende Objekte zu entfernen, sondern diese auch an einer neuen Stelle wieder einzufügen. So könnte man ein Sofa, zum Beispiel, ein kleines Stück zur Seite schieben, um dann einen virtuellen Schrank in die Szene einzufügen. Das Segment kann. wenn es nicht gedreht und nur leicht transliert wird, unverändert an einer neuen Stelle eingefügt werden. Alternativ gibt es unterschiedliche, auf Segmenten aufbauende, Ansätze, um neue Ansichten des Objektes aus mehreren vorhandenen Objektansichten zu erstellen. Hierzu zählt die Image Based Visual Hull und das Space Carving.

Image-Based Photo Hulls, Gregory G. Slabaugh, Ronald W. Schafer, Mat C. Hans, Client and Media Systems Laboratory, HP Laboratories Palo Alto HPL-2002-28, February 4th , 2002*

International Journal of Computer Vision 38(3), 199-218, 2000, °c 2000 Kluwer Academic Publishers. Manufactured in The Netherlands. "A Theory of Shape by Space Carving". KIRIAKOS N. KUTULAKOS, Department of Computer Science and Department of Dermatology, University of Rochester, Rochester, NY 14627, USA, kyros@cs.rochester.edu, STEVEN M. SEITZ The Robotics Institute, Carnegie Mellon University, Pittsburgh.

### Clustering:

"Shared Nearest Neighbour": "A New Shared Nearest Neighbor Clustering Algorithm and its Applications" von Levent Ertöz, Michael Steinbach, Vipin Kumar, Workshop on Clustering High Dimensional Data and its Applications at 2nd SIAM International Conference on Data Mining (2002) .Verwendet als Ähnlichkeitsmaß die Anzahl an gemeinsamen nächsten Nachbarn.

### "AUTOCLUST":

"AUTOCLUST: Automatic Clustering via Boundary Extraction for Mining Massive Point-data Sets" von Vladimir Estivill-Castro, Ickjai Lee, In Proceedings of the 5th International Conference on Geocomputation, Callaghan 2308, Australia, 2000; "Effective and efficient boundary-based clustering forthree-dimensional geoinformation studies" von Lee, I. Und Estivill-Castro, V. ,The Proceedings of the Third International Symposium on Cooperative Database Systems for Advanced Applications, 2001, pp. 82-91, Beijing, China. AUTOCLUST verwendet das Delaunay Diagramm zu der zu unterteilenden Punktmenge und entfernt daraus Kanten mit bestimmten Eigenschaften. Durch die verbleibenden Kanten wird der Datenraum in einzelne Bereiche aufgeteilt.

### "Graviclust"

"Gravity Based Spatial Clustering" von M. Indulska, M. E. Orlowska , pp. 125-130, Proceedings of the Tenth ACM International Symposium on Advances in Geographic Information Systems, McLean, VA, USA, Nov. 8.9, 2002. Bei GRAVlclust werden zunächst initiale Clusterzentren berechnet und diese anschließend durch Minimierung einer entsprechenden Kostenfunktion optimiert. Die Anzahl an Clustern muss dabei vorher bekannt sein oder kann iterativ ermittelt werden.

Selbst organisierende Karten (self organizing maps, SOMs): "Self-Organizing Maps", T. Kohonen. Springer, Berlin, 1995. "Automatic formation of topological maps of patterns in a self-organizing system", T. Kohonen., In Proceedings of 2nd Scandinavion Conference on Image Analysis, Espoa, Finland, pp. 214-220. Eine selbstorganisierende Karte ist ein n-dimensionales Feld mit m Knoten. Jeder Knoten in einer solchen selbstorganisierenden Karte besitzt einen Ortsvektor, der seine Position in der Karte festlegt, sowie einen Referenzvektor, der einem Punkt aus dem Bereich des Datensatzes entspricht. Beim Training der Karte wird in jedem Lernschritt zu jedem Datenpunkt derjenige Knoten bestimmt, dessen Referenzvektor den geringsten Abstand zu diesem besitzt. Anschließend werden die Referenzvektoren aller Knoten aus der Nachbarschaft des Gewinnerknotens modifiziert.

SAHN (sequenzielle agglomerative hierarchische nichtüberlappende Clusteranalyse): "Efficient algorithms for agglomerative hierarchical clustering methods", William H. E. Day und Herbert Edelsbrunner, Journal of Classification, Volume 1, pp.1-24, 1984. Zu Beginn des Algorithmus wird davon ausgegangen, dass jeder Punkt des Datensatzes ein einzelnes Cluster darstellt. In jedem Schritt wird dasjenige Paar von Clustern bestimmt, das den geringsten Abstand besitzt. Diese beiden Cluster werden dann zu einem einzigen Cluster verschmolzen. Für die Terminierung des Algorithmus muss die Anzahl an vorhandenen Clustern bekannt sein oder iterativ ermittelt werden.

DBSCAN (Density-Based Spatial Clustering of Applications with Noise):
"Density-based clustering in spatial databases: The algorithm GDBSCAN and its applications", J. Sander, M. Ester, H.-P. Kriegel, X. Xu. Data Mining and Knowledge Discovery, Volume 2, Number 2, June 1998, pp. 169-194(26); "A distribution-based clustering algortihm for mining in large spatial databases", X. Xu, M. Ester, H.-P. Kriegel, J. Sander, 14th Int. Conf. on Data Engineering (ICDE'98), Oriando, Fiorida, USA, 1998. variante des SAHN-Algorithmus, bei der statt eines Abstandsmaß Dichteschätzer zum Verschmelzen von Clustern verwendet werden.

SDHN (sequenzielle divisive hierarchische nichtüberlappende Clusteranalyse):
Zu Beginn des Algorithmus befinden sich alle Punkte im gleichen Cluster. Schrittweise werden die vorhandenen Cluster nun unterteilt. Für die Terminierung des Algorithmus muss entweder die Anzahl an vorhandenen Clustern bekannt sein oder es muss eine Analyse durchgeführt werden, ob eine weitere Unterteilung eines Clusters sinnvoll ist (z.B. mittels des Hopkinsindex).

Alternierende Optimierung von Cluster-Modellen (Alternating Cluster Estimation, ACE): "Alternating cluster estimation: a new tool for clustering and function approximation" von T. A. Runkler, J. C. Bezdek , IEEE Transactions on Fuzzy Systems, Vol. 7, Issue 4, Aug. 1999, pp. 377-393.Hierbei werden abwechselnd die Clusterzentren und die Partitionsmatrizen optimiert. Mögliche Cluster-Modelle sind hierbei: c-Means (CM-Modell) oder Gustafson-Kessel (GK-Modell).

## Patentansprüche

1. Verfahren zum Darstellen eines virtuellen Objekts in einer realen Umgebung, aufweisend die folgenden Schritte:
- Generieren wenigstens einer zweidimensionalen Abbildung einer realen Umgebung mittels eines Aufnahmegeräts,
- Ermitteln einer Position des Aufnahmegeräts relativ zu wenigstens einem Bestandteil der realen Umgebung,
- Segmentierung von wenigstens einem, in der Realität nicht markierten, Bereich der realen Umgebung in der zweidimensionalen Abbildung zur Identifizierung wenigstens eines Segments der realen Umgebung in Abgrenzung gegenüber einem übrigen Teil der realen Umgebung unter Bereitstellung von entsprechenden Segmentierungsdaten,
- Vermischen des virtuellen Objekts mit der zweidimensionalen Abbildung der realen Umgebung oder, mittels eines optischen, halbdurchlässigen Elementes, direkt mit der Realität unter Berücksichtigung der Segmentierungsdaten derart, dass wenigstens ein Teil des Segments der realen Umgebung durch eine Überdeckung aus der Abbildung der realen Umgebung entfernt wird, wobei
- die Überdeckung des zu entfernenden Teils der realen Umgebung auf Basis von Texturinformationen der, in der zweidimensionalen Abbildung nicht durch dieses Teil bedeckten, Umgebung des zu entfernenden Teils erfolgt, wobei Raumbeschreibungen bezüglich eines vorhandenen Bodens oder einer vorhandenen Wand zur Auswahl geeigneter Informationsquellen für die Wahl der verwendeten Texturinformation berücksichtigt werden, wobei die Wand nicht mit Informationen aus Boden-Texturen gefüllt wird und der Boden nicht mit Informationen aus Texturen gefüllt wird, deren Ursprung an der Position anderer, bekannter Objekte liegt.

2. Verfahren nach Anspruch 1, bei dem
der wenigstens eine Teil des Segments der realen Umgebung aus der ursprünglichen Abbildung der realen Umgebung entfernt und an einer anderen Stelle der Darstellung wieder eingefügt wird.

3. Verfahren nach einem der Ansprüche 1 bis 2, bei dem wenigstens ein Bereich der realen Umgebung ausgewählt wird, aus welchem Informationen zum Überdecken des zu entfernenden Teils der realen Umgebung gewonnen werden.

4. Verfahren nach einem der Ansprüche 1 bis 3, bei dem die Informationen bezüglich des ausgewählten Segments räumlich, beispielsweise mittels einer Umrandungsgeometrie, angegeben werden und auch für andere Ansichten des gleichen realen Gegenstandes, aus dem sich das Segment ergeben hat, wiederverwendet werden können.

5. Verfahren nach einem der Ansprüche 1 bis 4, bei dem dreidimensionale Tiefeninformationen zur Auswahl geeigneter Informationsquellen, insbesondere in Form einer vorhandenen Bodenebene oder einer vorhandenen Wandebene, für die Wahl der verwendeten Texturinformation berücksichtigt werden.

6. Verfahren nach einem der Ansprüche 1 bis 5, bei dem zur Identifizierung wenigstens eines Segments der realen Umgebung ein Bereich der realen Umgebung identifiziert wird, der eine Grenze zwischen einer vorhandenen Bodenebene und einer vorhandenen Wandebene der realen Umgebung überschreitet.

7. Verfahren nach einem der Ansprüche 1 bis 6, bei dem zur Identifizierung wenigstens eines Segments der realen Umgebung eine virtuelle Geometriefigur an einer entsprechenden Stelle der realen Umgebung platziert wird.

8. Verfahren nach Anspruch 7, bei dem
die dreidimensionale Figur auf Basis der Raumbeschreibung und/oder der auf Basis einer optischen Markierung bekannten Bodenebene annähernd realitätsnah innerhalb des Raumes und parallel zur Bodenebene bewegt wird.

9. Verfahren nach einem der Ansprüche 1 bis 8, bei dem mittels Raumbeschreibung oder Segmentierungsdaten ermittelte Rauminformationen den Bewegungsraum virtueller Objekte einschränken.

10. Verfahren nach einem der Ansprüche 1 bis 9, bei dem mittels Raumbeschreibung oder Segmentierungsdaten ermittelte Rauminformationen den Schattenwurf virtueller Objekte beeinflussen.

11. Verfahren nach einem der Ansprüche 1 bis 10, bei dem
- die reale Umgebung mittels des Aufnahmegeräts unter verschiedenen Positionen des Aufnahmegeräts optisch aufgenommen wird und eine jeweilige Aufnahme in einem entsprechenden Aufnahme-Bilddatensatz gespeichert wird,
- die in einem der Aufnahme-Bilddatensätze gewonnenen Segmentdaten in den übrigen der Aufnahme-Bilddatensätze verwendet werden, um die reale Umgebung mit dem eingefügten virtuellen Objekt in jeweiligen den Aufnahme-Bilddatensätzen entsprechenden Ansichten darzustellen.

12. Verfahren nach einem der Ansprüche 1 bis 11, bei dem das virtuelle Objekt ein fahrzeugbezogener Gegenstand oder eine fahrzeugbezogene Anzeige ist und die reale Umgebung eine Fahrzeugumgebung ist.

13. Vorrichtung zum Darstellen eines virtuellen Objekts in einer realen Umgebung, aufweisend folgende Merkmale:
- ein Aufnahmegerät zur Erzeugung einer zweidimensionalen Abbildung der realen Umgebung,
- ein Datenverarbeitungssystem, welches die Position des Aufnahmegeräts relativ zu wenigstens einem Bestandteil der aufgenommenen realen Umgebung bestimmt,
- wobei in dem Datenverarbeitungssystem ein Verfahren implementiert ist, das zur Segmentierung von wenigstens einem, in der Realität nicht markierten Bereich der realen Umgebung in der zweidimensionalen Abbildung zur Identifizierung wenigstens eines Segments der realen Umgebung in Abgrenzung gegenüber einem übrigen Teil der realen Umgebung unter Bereitstellung von entsprechenden Segmentierungsdaten geeignet ist,
- und eine mit dem Datenverarbeitungssystem verbundene Anzeigeeinrichtung, welche die mit dem Aufnahmegerät erzeugte Abbildung der realen Umgebung vermischt mit dem virtuellen Objekt unter Berücksichtigung der Segmentierungsdaten derart anzeigt, dass wenigstens ein Teil des Segments der realen Umgebung aus der Abbildung der realen Umgebung entfernt wird, wobei eine Überdeckung des zu entfernenden Teils der realen Umgebung auf Basis von Texturinformationen der, in der zweidimensionalen Abbildung nicht durch dieses Teil bedeckten, Umgebung des zu entfernenden Teils erfolgt, wobei Raumbeschreibungen bezüglich eines vorhandenen Bodens oder einer vorhandenen Wand zur Auswahl geeigneter Informationsquellen für die Wahl der verwendeten Texturinformation berücksichtigt werden, wobei die Wand nicht mit Informationen aus Boden-Texturen gefüllt wird und der Boden nicht mit Informationen aus Texturen gefüllt wird, deren Ursprung an der Position anderer, bekannter Objekte liegt.

14. Vorrichtung zum Darstellen eines virtuellen Objekts in einer realen Umgebung, aufweisend folgende Merkmale:
- ein Aufnahmegerät zur Erzeugung einer zweidimensionalen Abbildung der realen Umgebung,
- ein Datenverarbeitungssystem, welches die Position des Aufnahmegeräts relativ zu wenigstens einem Bestandteil der aufgenommenen realen Umgebung bestimmt,
- eine optische, halbdurchlässige Darstellungsvorrichtung, mit welcher die reale Umgebung über eine Transparenz der Darstellungsvorrichtung zu sehen ist und eine Vermischung der realen Umgebung mit einem virtuellen Objekt über Projektion auf die Darstellungsvorrichtung erzeugbar ist,
- wobei das Datenverarbeitungssystem die Position der Darstellungsvorrichtung relativ zu wenigstens einem Bestandteil der realen Umgebung bestimmt,
- wobei in dem Datenverarbeitungssystem ein Verfahren implementiert ist, das zur Segmentierung von wenigstens einem, in der Realität nicht markierten Bereich der realen Umgebung in der zweidimensionalen Abbildung zur Identifizierung wenigstens eines Segments der realen Umgebung in Abgrenzung gegenüber einem übrigen Teil der realen Umgebung unter Bereitstellung von entsprechenden Segmentierungsdaten geeignet ist,
- wobei die Darstellung des virtuellen Modells vermischt mit der realen Umgebung unter Berücksichtigung der Segmentierungsdaten auf der Darstellungsvorrichtung derart angezeigt wird, dass wenigstens ein Teil des Segments der realen Umgebung durch eine Überdeckung aus der Darstellung entfernt wird, wobei die Überdeckung des zu entfernenden Teils der realen Umgebung auf Basis von Texturinformationen der, in der zweidimensionalen Abbildung nicht durch dieses Teil bedeckten, Umgebung des zu entfernenden Teils erfolgt, wobei Raumbeschreibungen bezüglich eines vorhandenen Bodens oder einer vorhandenen Wand zur Auswahl geeigneter Informationsquellen für die Wahl der verwendeten Texturinformation berücksichtigt werden, wobei die Wand nicht mit Informationen aus Boden-Texturen gefüllt wird und der Boden nicht mit Informationen aus Texturen gefüllt wird, deren Ursprung an der Position anderer, bekannter Objekte liegt.

15. Computerprogrammprodukt, welches Softwarecodeabschnitte aufweist, welche in einem Verfahren nach einem der Ansprüche 1 bis 12 zum Ermitteln der Position des Aufnahmegeräts, zur Segmentierung von wenigstens einem Bereich der realen Umgebung und zum Vermischen des virtuellen Objekts mit der realen Umgebung unter Berücksichtigung der Segmentierungsdaten geeignet sind, wenn sie in einem System zum Darstellen eines virtuellen Objekts in einer realen Umgebung gespeichert sind.

## Claims

1. A method for representing a virtual object in a real environment, having the following steps:
- generating at least one two-dimensional image of a real environment by means of a recording device,
- ascertaining a position of the recording device relative to at least one component of the real environment,
- segmenting at least one area of the real environment unmarked in reality in the two-dimensional image for identifying at least one segment of the real environment in distinction to a remaining part of the real environment while supplying corresponding segmentation data,
- merging the virtual object with the two-dimensional image of the real environment or, by means of an optical, semitransparent element, directly with reality with consideration of the segmentation data such that at least one part of the segment of the real environment is removed from the image of the real environment by concealment, wherein
- said concealment of the part of the real environment to be removed is effected on the basis of texture information in the surroundings of the part to be removed that is not concealed by this part in the two-dimensional image, wherein spatial descriptions with regard to an existing floor or an existing wall for selection of suitable information sources are considered for the choice of the texture information employed, wherein the wall is not filled with information from floor textures and the floor is not filled with information from textures whose origin is at the position of other, known objects.

2. The method according to claim 1, wherein
the at least one part of the segment of the real environment is removed from the original image of the real environment and reinserted at another place in the representation.

3. The method according to either of claims 1 to 2, wherein
at least one area of the real environment is selected from which information is obtained for concealing the part of the real environment to be removed.

4. The method according to any of claims 1 to 3, wherein
the information with regard to the selected segment is stated spatially, for example by means of a bounding geometry, and can also be reused for other views of the same real object from which the segment has resulted.

5. The method according to any of claims 1 to 4, wherein
three-dimensional depth information for selection of suitable information sources, in particular in the form of an existing floor plane or an existing wall plane, is considered for the choice of the employed texture information.

6. The method according to any of claims 1 to 5, wherein
for identifying at least one segment of the real environment, an area of the real environment is identified which goes beyond a boundary between an existing floor plane and an existing wall plane of the real environment.

7. The method according to any of claims 1 to 6, wherein
for identifying at least one segment of the real environment, a virtual geometrical figure is positioned at a corresponding place in the real environment.

8. The method according to claim 7, wherein
the three-dimensional figure is moved within the space and parallel to the floor plane in a way approximately close to reality on the basis of the spatial description and/or the floor plane known on the basis of an optical marking.

9. The method according to any of claims 1 to 8, wherein
spatial information ascertained by means of spatial description or segmentation data restricts the room for movement of virtual objects.

10. The method according to any of claims 1 to 9, wherein
spatial information ascertained by means of spatial description or segmentation data influences the shadows cast by virtual objects.

11. The method according to any of claims 1 to 10, wherein
- the real environment is optically recorded by means of the recording device from different positions of the recording device, and a respective recording is stored in a corresponding recording image data set,
- the segment data obtained in one of the recording image data sets are employed in the other ones of the recording image data sets to represent the real environment with the inserted virtual object in respective views corresponding to the recording image data sets.

12. The method according to any of claims 1 to 11, wherein
the virtual object is a vehicle-based object or a vehicle-based display and the real environment is a vehicle environment.

13. An apparatus for representing a virtual object in a real environment, having the following features:
- a recording device for generating a two-dimensional image of the real environment,
- a data processing system which determines the position of the recording device relative to at least one component of the recorded real environment,
- wherein in the data processing system there is implemented a method which is suitable for segmenting at least one area of the real environment unmarked in reality in the two-dimensional image for identifying at least one segment of the real environment in distinction to a remaining part of the real environment while supplying corresponding segmentation data,
- and an indicating device connected to the data processing system, which displays the image of the real environment generated by the recording device merged with the virtual object with consideration of the segmentation data such that at least one part of the segment of the real environment is removed from the image of the real environment, wherein concealment of the part of the real environment to be removed is effected on the basis of texture information in the surroundings of the part to be removed that is not concealed by this part in the two-dimensional image, wherein spatial descriptions with regard to an existing floor or an existing wall for selection of suitable information sources are considered for the choice of the texture information employed, wherein the wall is not filled with information from floor textures and the floor is not filled with information from textures whose origin is at the position of other, known objects.

14. An apparatus for representing a virtual object in a real environment, having the following features:
- a recording device for generating a two-dimensional image of the real environment,
- a data processing system which determines the position of the recording device relative to at least one component of the recorded real environment,
- an optical, semitransparent display apparatus with which the real environment can be seen via a transparency of the display apparatus, and a merging of the real environment with a virtual object is generatable via projection onto the display apparatus,
- wherein the data processing system determines the position of the display apparatus relative to at least one component of the real environment,
- wherein in the data processing system there is implemented a method which is suitable for segmenting at least one area of the real environment unmarked in reality in the two-dimensional image for identifying at least one segment of the real environment in distinction to a remaining part of the real environment while supplying corresponding segmentation data,
- wherein the representation of the virtual model merged with the real environment with consideration of the segmentation data is displayed on the display apparatus such that at least one part of the segment of the real environment is removed from the representation by concealment, wherein said concealment of the part of the real environment to be removed is effected on the basis of texture information in the surroundings of the part to be removed that is not concealed by this part in the two-dimensional image, wherein spatial descriptions with regard to an existing floor or an existing wall for selection of suitable information sources are considered for the choice of the texture information employed, wherein the wall is not filled with information from floor textures and the floor is not filled with information from textures whose origin is at the position of other, known objects.

15. A computer program product which has software code portions which are suitable in a method according to any of claims 1 to 12 for ascertaining the position of the recording device, for segmenting at least one area of the real environment and for merging the virtual object with the real environment with consideration of the segmentation data when they are stored in a system for representing a virtual object in a real environment.

## Revendications

1. Procédé pour la représentation d'un objet virtuel dans un environnement réel, présentant les étapes suivantes consistant à :
- générer au moins une reproduction en deux dimensions d'un environnement réel au moyen d'un appareil d'enregistrement ;
- déterminer une position de l'appareil d'enregistrement par rapport à au moins un constituant de l'environnement réel ;
- segmenter au moins une zone de l'environnement réel, non marquée dans la réalité, dans la reproduction en deux dimensions pour l'identification d'au moins un segment de l'environnement réel à des fins de démarcage par rapport à une partie restante de l'environnement réel en procurant des données de segmentation correspondantes ;
- mélanger l'objet virtuel avec la reproduction de l'environnement réel en deux dimensions, ou bien, au moyen d'un élément optique semi-transparent, directement avec la réalité, en prenant en compte les données de segmentation, de manière telle que l'on extrait de la reproduction de l'environnement réel au moins une partie du segment de l'environnement réel via un recouvrement ;
- le recouvrement de la partie de l'environnement réel à extraire ayant lieu sur base d'informations de texture concernant l'environnement de la partie à extraire, non recouvert par cette partie dans la reproduction en deux dimensions, des descriptions spatiales concernant un sol présent ou un mur présent pour la sélection de sources d'informations appropriées étant prises en compte pour le choix des informations de texture utilisées, le mur n'étant pas rempli avec des informations provenant de la texture du sol et le sol n'étant pas rempli avec des informations provenant de textures dont l'origine correspond à la position d'autres objets connus.

2. Procédé selon la revendication 1, dans lequel ladite au moins une partie du segment de l'environnement réel est extraite de la reproduction initiale de l'environnement réel et est réintroduite à un autre endroit de la représentation.

3. Procédé selon l'une quelconque des revendications 1 à 2, dans lequel on sélectionne au moins une zone de l'environnement réel à partir de laquelle on obtient des informations pour le recouvrement de la partie de l'environnement réel à extraire.

4. Procédé selon l'une quelconque des revendications 1 à 3, dans lequel on mentionne les informations concernant le segment sélectionné, de manière spatiale, par exemple au moyen d'une géométrie de pourtour, et on peut les réutiliser également pour d'autres vues du même objet réel à partir duquel le segment a été obtenu.

5. Procédé selon l'une quelconque des revendications 1 à 4, dans lequel on se base sur des informations de profondeur en trois dimensions pour la sélection de sources d'informations appropriées, en particulier sous la forme d'un niveau de sol présent ou d'un plan de mur présent pour le choix des informations de texture utilisées.

6. Procédé selon l'une quelconque des revendications 1 à 5, dans lequel, pour l'identification d'au moins un segment de l'environnement réel, on identifie une zone de l'environnement réel qui franchit une frontière entre un niveau de sol présent et un plan de mur présent de l'environnement réel.

7. Procédé selon l'une quelconque des revendications 1 à 6, dans lequel pour l'identification d'au moins un segment de l'environnement réel on place une figure géométrique virtuelle à un endroit correspondant de l'environnement réel.

8. Procédé selon la revendication 7, dans lequel on déplace la figure en trois dimensions sur base de la description spatiale et/ou du niveau de sol connu sur base d'un marquage optique, d'une manière approximativement proche de la réalité, au sein de l'espace et parallèlement au niveau du sol.

9. Procédé selon l'une quelconque des revendications 1 à 8, dans lequel des informations spatiales déterminées au moyen d'une description spatiale ou de données de segmentation restreignent l'ampleur de mouvement d'objets virtuels.

10. Procédé selon l'une quelconque des revendications 1 à 9, dans lequel des informations spatiales déterminées au moyen d'une description spatiale ou de données de segmentation influencent la projection d'ombre d'objets virtuels.

11. Procédé selon l'une quelconque des revendications 1 à 10, dans lequel
- l'environnement réel est enregistré par voie optique au moyen de l'appareil d'enregistrement à partir de différentes positions de l'appareil d'enregistrement et une photographie respective est stockée dans un ensemble de données de photographies-images correspondant ;
- les données de segments que l'on obtient dans un des ensembles de données de photographies-images sont utilisées dans les autres ensembles de données de photographies-images pour représenter l'environnement réel dans lequel a été introduit l'objet virtuel dans chacune des vues correspondant aux ensembles de données de photographies-images.

12. Procédé selon l'une quelconque des revendications 1 à 11, dans lequel l'objet virtuel est un objet lié à un véhicule ou une indication liée à un véhicule et l'environnement réel est un environnement de véhicule.

13. Dispositif pour la représentation d'un objet virtuel dans un environnement réel, présentant les caractéristiques suivantes :
- un appareil d'enregistrement pour obtenir une reproduction de l'environnement réel en deux dimensions ;
- un système de traitement de données qui détermine la position de l'appareil d'enregistrement par rapport à au moins un constituant de l'environnement réel enregistré ;
- dans lequel, dans le système de traitement de données, on met en oeuvre un procédé qui est approprié pour la segmentation d'au moins une zone, non marquée dans la réalité, de l'environnement réel dans la reproduction en deux dimensions pour l'identification d'au moins un segment de l'environnement réel à des fins de démarcage par rapport à une partie restante de l'environnement réel en procurant des données de segmentation correspondantes ;
- et un mécanisme d'affichage lié au système de traitement de données qui mélange la reproduction de l'environnement réel obtenue avec l'appareil d'enregistrement avec l'objet virtuel en prenant en compte les données de segmentation de manière telle que l'on extrait au moins une partie du segment de l'environnement réel à partir de la reproduction de l'environnement réel, un recouvrement de la partie à extraire de l'environnement réel ayant lieu sur base d'informations de texture de l'environnement de la partie à extraire, non recouvert par cette partie dans la représentation en deux dimensions, des descriptions spatiales concernant un sol présent ou un mur présent pour la sélection de sources d'information appropriées étant prises en compte pour le choix des informations de texture utilisées, le mur n'étant pas rempli avec des informations provenant de la texture du sol et le sol n'étant pas rempli avec des informations provenant de textures dont l'origine correspond à la position d'autres objets connus.

14. Dispositif pour la représentation d'un objet virtuel dans un environnement réel, présentant les caractéristiques suivantes :
- un appareil d'enregistrement pour obtenir une reproduction de l'environnement réel en deux dimensions ;
- un système de traitement de données qui détermine la position de l'appareil d'enregistrement par rapport à au moins un constituant de l'environnement réel enregistré ;
- un dispositif de représentation optique semi-transparent avec lequel on peut observer l'environnement réel via une transparence du dispositif de représentation et on peut obtenir un mélange de l'environnement réel avec un objet virtuel via une projection sur le dispositif de représentation ;
- le système de traitement de données déterminant la position du dispositif de représentation par rapport à au moins un constituant de l'environnement réel ;
- un procédé étant mis en oeuvre dans le système de traitement de données, qui est approprié pour la segmentation d'au moins une zone, non marquée dans la réalité, de l'environnement réel dans la reproduction en deux dimensions pour l'identification d'au moins un segment de l'environnement réel à des fins de démarcage par rapport à une partie restante de l'environnement réel en procurant des données de segmentation correspondantes ;
- la représentation du modèle virtuel mélangé avec l'environnement réel étant affichée, en prenant en compte les données de segmentation, sur le dispositif de représentation de manière telle que l'on extrait de la reproduction au moins une partie du segment de l'environnement réel via un recouvrement, le recouvrement de la partie de l'environnement réel à extraire ayant lieu sur base d'informations de texture concernant l'environnement de la partie à extraire, non recouvert par cette partie dans la reproduction en deux dimensions, des descriptions spatiales concernant un sol présent ou un mur présent pour la sélection de sources d'information appropriées étant prises en compte pour le choix des informations de texture utilisées, le mur n'étant pas rempli avec des informations provenant de la texture du sol et le sol n'étant pas rempli avec des informations provenant de textures dont l'origine correspond à la position d'autres objets connus.

15. Produit de programme informatique qui présente des sections de codes de logiciels qui sont appropriées dans un procédé selon l'une quelconque des revendications 1 à 12, pour la détermination de la position de l'appareil d'enregistrement, pour la segmentation d'au moins une zone de l'environnement réel et pour le mélange de l'objet virtuel avec l'environnement réel en prenant en compte les données de segmentation, lorsque ces dernières sont enregistrées dans un système pour la représentation d'un objet virtuel dans un environnement réel.
